# EUROPÄISCHE PATENTSCHRIFT

(11) **EP 3 325 315 B1**
(45) Veröffentlichungstag und Bekanntmachung des Hinweises auf die Patenterteilung: **29.04.2020**
(21) Anmeldenummer: 16751475.1
(22) Anmeldetag: 18.07.2016
(51) Int. Cl.: B60R 21/216, B60R 13/02, F16B 2/08, F16B 5/06, F16B 21/06, F16B 21/07, F16B 21/08

(54) **BEFESTIGER ZUM LÖSBAREN VERBINDEN EINES PANEELS AN EINER STRUKTUR, ABDECKPANEEL FÜR EIN AIRBAG UND FAHRZEUG MIT EINER STRUKTUR UND EINEM AIRBAG**
FIXTURE FOR DETACHABLY CONNECTING A PANEL ON A STRUCTURE, COVERING PLATE FOR AN AIRBAG AND VEHICLE WITH A STRUCTURE AND AN AIRBAG
ATTACHE DE RACCORDEMENT AMOVIBLE ATTACHRER UN PANNEAUX SUR UNE STRUCTURE, COUVERTURE POUR UN AIRBAG ET VEHICULE AVEC UNE STRUCTURE ET UN AIRBAG

(30) Priorität: 24.07.2015 DE 102015009367; 24.07.2015 DE 202015005178 U; 17.12.2015 DE 102015016325
(43) Veröffentlichungstag der Anmeldung: 30.05.2018
(73) Patentinhaber: A. Raymond et Cie. SCS, 38000 Grenoble (FR)
(72) Erfinder: MARINI, Alexander, 79618 Rheinfelden (DE); JUNGE, Andy, 79400 Kandern (DE); RHEIN, Axel, 79585 Steinen (DE); HEß, Tobias, 79541 Lörrach (DE)
(74) Vertreter: Tilmann, Max Wilhelm
(86) Internationale Anmeldenummer: PCT/EP2016/001252
(87) Internationale Veröffentlichungsnummer: WO 2017/016652

(56) Entgegenhaltungen:
- WO-A1-01/40667
- FR-A1- 2 780 115
- US-A1- 2008 235 919
- US-A1- 2011 221 170

## Beschreibung

Die Erfindung betrifft einen Befestiger zum lösbaren Verbinden eines Paneels an einer Struktur. Ferner betrifft die Erfindung ein Abdeckpaneel für einen Airbag, das dafür geeignet ist, ein Airbag, das zwischen dem Abdeckpaneel und einer Struktur eines Fahrzeugs angeordnet ist, abzudecken. Ebenso betrifft die Erfindung ein Fahrzeug mit einer Struktur und einem Airbag und eben einem solchen Abdeckpaneel.

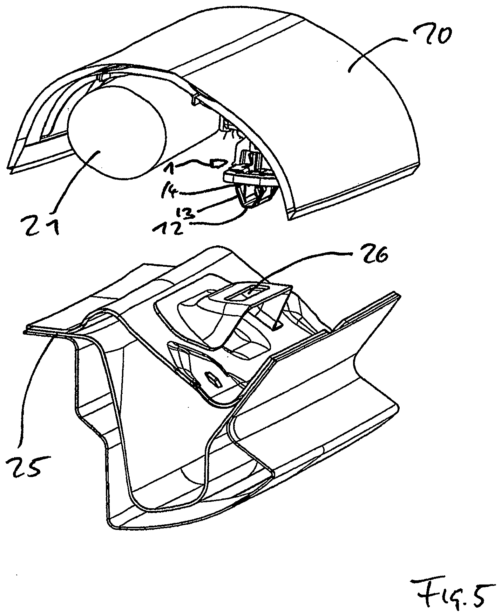

Aus WO 01/40667 A1 ist ein Befestiger zum lösbaren Verbinden eines Paneels an einer Struktur bekannt, der einen ersten Verbinder zum Verbinden des Befestigers mit der Struktur und einen zweiten Verbinder zum Verbinden des Befestigers mit dem Paneel aufweist, wobei der zweite Verbinder in dem normalen Betriebszustand des Befestigers mit dem ersten Verbinder verbunden ist. Ein Rückhalteband ist vorgesehen, das mit seinem ersten Ende mit dem ersten Verbinder und mit seinem zweiten Ende mit dem zweiten Verbinder verbunden ist, wobei zumindest ein Teil des Rückhaltebandes in dem in der Fig. 5 C gezeigten normalen Betriebszustand des Befestigers eine gebogene Form aufweist.

Aus US 2008/0235919 A1 ist ein Befestiger zum lösbaren Verbinden eines Paneels an einer Struktur bekannt, wobei der Befestiger einen ersten Verbinder zum Verbinden des Befestigers mit der Struktur und einen zweiten Verbinder zum Verbinden des Befestigers mit dem Paneel aufweist, wobei der zweite Verbinder in dem normalen Betriebszustand des Befestigers (vgl. Fig. 1) lösbar mit dem ersten Verbinder verbunden ist. Bei der aus US 2008/0235919 A1 bekannten Konstruktion sind zwei Rückhaltebänder vorgesehen, die jeweils mit seinem ersten Ende mit dem ersten Verbinder und mit seinem zweiten Ende mit dem zweiten Verbinder verbunden sind. Bei jedem der beiden Rückhaltebänder weist zumindest ein Teil des Rückhaltebandes in dem normalen Betriebszustand des Befestigers (Fig. 1) eine gebogene Form auf. Der in US 2008/0235919 A1 beschriebene Befestiger wird dazu verwendet, um ein ein Airbag unterstützendes Paneel austauschbar mit einer Struktur eines Fahrzeugs zu verbinden. Es soll möglich sein, das Paneel einfach auszutauschen, nachdem das Airbag aktiviert wurde. Ferner wird in US 2008/0235919 A1 beschrieben, dass es wünschenswert sei, die Bewegung des Paneels zu beschränken, nachdem das Airbag auslöst.

Vor diesem Hintergrund lag der Erfindung die Aufgabe zugrunde, einen Befestiger zum lösbaren Verbinden eines Paneels an eine Struktur zu schaffen, der nach dem Lösen des Verbindens eine bessere Möglichkeit bietet, die Bewegung des Paneels in Relation zu der Struktur zu beeinflussen. Ferner lag die Aufgabe darin, ein Abdeckpaneel für ein Airbag, das dafür geeignet ist, ein Airbag derart weiterzubilden, dass die Bewegung des Abdeckpaneels in Relation zu der Struktur des Fahrzeugs besser kontrolliert werden kann, wenn das Airbag auslöst. Ferner bestand die Aufgabe darin, ein Fahrzeug mit einer Struktur und einem Airbag und eben einem solchen Abdeckpaneel vorzuschlagen.

Die Erfindung wird durch den Gegenstand des Anspruchs 1 gelöst.

Gemäß einem ersten Aspekt geht die Erfindung von dem Grundgedanken aus, bei dem erfindungsgemäßen Befestiger einen Abstandshalter vorzusehen, die zwischen dem ersten Verbinder und dem zweiten Verbinder angeordnet ist. Der Abstandhalter weist einen Vorsprung auf, der in dem normalen Betriebszustand des Befestigers in den Raum innerhalb des gebogen ausgebildeten Teils des Rückhaltebands hineinragt. Damit schafft die Erfindung die Möglichkeit, beim Lösen der Verbindung des zweiten Verbinders mit dem ersten Verbinder, beispielsweise dann, wenn ein Airbag auslöst und im Zuge seiner Entfaltung das es abdeckende Paneel von der Struktur fortdrückt, einen Kontakt zwischen dem Vorsprung des Abstandhalters und dem Rückhalteband zu schaffen. Dieser Kontakt zwischen dem Rückhalteband und dem Vorsprung des Abstandhalters kann beispielsweise dazu genutzt werden, einen Drehpunkt zu erzeugen, um den der zweite Verbinder relativ zum ersten Verbinder drehen kann. Es sind beispielsweise Ausführungsformen denkbar, bei denen der erfindungsgemäße Befestiger zum lösbaren Verbinden eines Abdeckpaneels für ein Airbag mit einer Struktur eingesetzt wird und bei der aufgrund der Art des Auslösens des Airbags der zweite Verbinder derart von dem ersten Verbinder getrennt wird, dass er sich in einer linearen Richtung relativ zum ersten Verbinder bewegt. Dadurch, dass der Abstandhalter einen in den gebogen ausgebildeten Teil des Rückhaltebands hineinragenden Vorsprung aufweist, wird es bei einer linearen Bewegung des ersten Verbinders relativ zum zweiten Verbinder möglich, dass der Vorsprung in Kontakt mit einem Teil des gebogen ausgebildeten Teils des Rückhaltebands kommt. An diesem Kontaktpunkt, bzw. an dieser Kontaktfläche kann dann ein Drehpunkt entstehen, um den der zweite Verbinder relativ zum ersten Verbinder rotiert. Dadurch entsteht eine erste Möglichkeit, die Bewegung des zweiten Verbinders relativ zum ersten Verbinder zu beeinflussen und damit auch die Bewegung des Paneels relativ zu der Struktur zu beeinflussen. Ferner ist es denkbar, dass sich bei einer bevorzugten Ausführungsform das zumindest zu einem Teil in gebogener Form ausgeführte Rückhalteband bei einer linearen Bewegung des zweiten Verbinders relativ zum ersten Verbinder in Richtung auf eine gestreckte Ausrichtung des Rückhaltebands (eine linear ausgestreckte Form des Rückhaltebands) hin zubewegt. Dabei wird der eine gebogene Form aufweisende Teil des Rückhaltebandes in Richtung auf eine lineare Ausrichtung hin bewegt. Das kann unter Verkleinerung des Raums erfolgen, der zunächst innerhalb des gebogen ausgebildeten Teils des Rückhaltebandes bestand. Da sich aber der Vorsprung des Abstandhalters in diesem Raum befindet, führt eine Verringerung des Raums beim Linearisieren des gebogen ausgeführten Teils des Rückhaltebandes dazu, dass das Rückhalteband mit dem Vorsprung des Abstandhalters in Kontakt kommt. Auch auf diese Weise kann ein Drehpunkt geschaffen werden, um den sich der zweite Verbinder relativ zum ersten Verbinder drehen kann. Auch dies bietet eine Möglichkeit, die Bewegung des ersten Verbinders relativ zum zweiten Verbinder zu beeinflussen.

Im Rahmen der Beschreibung der vorliegenden Erfindung wird von einem lösbaren Befestigen einerseits und von einem Verbinden gesprochen. Das "lösbare Befestigen" wird so verstanden, dass das Paneel derart mit der Struktur befestigt ist, dass sich das Paneel in dem normalen Betriebszustand nicht von der Struktur löst. Zugleich gibt es aber einen definierten Betriebszustand, beispielsweise das Auslösen eines von dem Paneel abgedeckten Airbags oder - in einem anderen denkbaren Anwendungsgebiet der Erfindung - wenn das Paneel mit einer Krafteinwirkung oberhalb eines vorher festgelegten Kraftniveaus von der Struktur weggezogen wird, bei dem sich das Paneel von der Struktur löst und dann nur noch durch das Rückhalteband an der Struktur gehalten wird. Das Lösen der Befestigung zwischen Paneel und Struktur ist somit ein gewollter Betriebszustand des erfindungsgemäßen Befestigers. Demgegenüber wird mit einem "Verbinden" eine feste Verbindung zwischen zwei Teilen beschrieben, die in keinem Betriebszustand des Befestigers gelöst werden soll. Das schließt nicht aus, dass auch eine solche Verbindung gelöst werden kann. Dies kann beispielsweise dann vorgesehen sein, wenn das Paneel vollständig von der Struktur getrennt werden soll, beispielsweise in einem Wartungsfall. Die Art der Verbindung des Befestigers mit der Struktur und die Art der Verbindung des Befestigers mit dem Paneel soll jedoch so gewählt sein, dass sie nach wie vor bestehen bleibt, während die lösbare Befestigung zwischen dem Paneel und der Struktur gelöst wird. Ebenso soll das erfindungsgemäß vorgesehene Rückhalteband mit seinem ersten Ende mit dem ersten Verbinder verbunden sein und mit seinem zweiten Ende mit dem zweiten Verbinder verbunden sein, wobei diese Verbindungen so fest ausgeführt sind, dass sie sich nicht lösen, wenn die lösbare Befestigung des Paneels an der Struktur gelöst wird. Insbesondere bevorzugt ist die Verbindung des ersten Endes des Rückhaltebandes mit dem ersten Verbinder so ausgeführt, dass sie das erste Ende des Rückhaltebandes nicht relativ zum ersten Verbinder bewegen kann. Ebenso ist in einer bevorzugten Ausführungsform die Verbindung des zweiten Endes des Rückhaltebandes mit dem zweiten Verbinder derart ausführt, dass sie das zweite Ende nicht relativ zum zweiten Verbinder bewegen kann.

Der erfindungsgemäße Befestiger weist ein Rückhalteband mit einem ersten Ende und einem zweiten Ende auf. Das Rückhalteband ist ein sich in eine Längenrichtung erstreckendes Objekt, dessen Erstreckung in die Längenrichtung größer ist, als seine Breite und seine Höhe. Dabei ist der Begriff "Längenrichtung" nicht so zu verstehen, dass sich das Rückhalteband zwingend in eine Erstreckung entlang einer Linie überführen lassen muss. Die Längenrichtung beschreibt allein den Umstand, dass sich das Rückhalteband entlang eines (auch Bogen aufweisen könnenden) Pfads erstreckt. Das Rückhalteband ist zumindest entlang eines Teilabschnitts seiner Längenausdehnung flexibel ausgeführt, sodass es unter Krafteinwirkung ohne zu Brechen von einer ersten Form in eine zweite Form überführt werden kann. Dabei sind Ausführungsformen denkbar, bei denen sich die Flexibilität des Rückhaltebandes entlang der Längenausdehnung ändert. So ist es beispielsweise denkbar, dass das erste Ende und/oder das zweite Ende deutlich starrer ausgeführt sind, als ein zwischen dem ersten Ende und dem zweiten Ende liegender Abschnitt des Rückhaltebandes. Ein starres Ausbilden des ersten Endes, bzw. des zweiten Endes vereinfacht das Verbinden des ersten Endes mit dem ersten Verbinder, bzw. das Verbinden des zweiten Endes mit dem zweiten Verbinder. Die Form der Querschnittsfläche des Rückhaltebandes (die Fläche senkrecht zur Längsausdehnung am jeweiligen Ort) kann rund, ellipsenförmig, quadratisch, rechteckig, polygon oder von anderer Form sein.

Das erfindungsgemäße Rückhalteband ist so ausgeführt, dass zumindest ein Teil des Rückhaltebandes in dem normalen Betriebszustand des Befestigers eine gebogene Form ausweist. In einer bevorzugten Ausführungsform erstreckt sich das erste Ende entlang einer Geraden und/oder das zweite Ende des Rückhaltebandes entlang einer Geraden, während der zwischen dem ersten Ende und dem zweiten Ende liegende Teil des Rückhaltebandes in dem normalen Betriebszustand des Befestigers eine gebogene Form aufweist. Durch die Wahl der Flexibilität, bzw. der Starrheit des Rückhaltebandes entlang seiner Längsausdehnung, aber auch durch die Wahl seiner Formgebung, insbesondere entlang welcher Abschnitt sich das Rückhalteband möglicherweise entlang einer Geraden erstreckt und in welchen Bereichen das Rückhalteband eine gebogene Form aufweist, lässt sich die Bewegung des Paneels relativ zu der Struktur beim Lösen der Befestigung beeinflussen. Insbesondere lässt sich durch geeignete Wahl dieser Parameter bestimmten, an welchem Punkt, bzw. in welchem Bereich des Rückhaltebands durch entsprechende Formgebung und entsprechende Flexibilität ein Einfluss auf die Bewegung des ersten Verbinders relativ zum zweiten Verbinder beim Lösen der Verbindung erreicht werden kann.

In einer bevorzugten Ausführungsform ist das Rückhalteband derart ausgeführt, dass seine gebogene Form eine Änderung der Ausrichtung des Rückhaltebands um mehr als 45°, insbesondere um ca. 90° oder insbesondere bevorzugt um mehr als 90° bewirkt. In einer bevorzugten Ausführungsform ist das Rückhalteband derart ausgeführt, dass seine gebogene Form eine Änderung der Ausrichtung des Rückhaltebands um weniger als 180°, insbesondere um ca. 90° oder insbesondere bevorzugt um weniger als 90° bewirkt.

Bei dem erfindungsgemäßen Befestiger ist ein Abstandhalter zwischen dem ersten Verbinder und dem zweiten Verbinder angeordnet. Der Abstandhalter kann an dem ersten Verbinder lösbar befestigt und an dem zweiten Verbinder lösbar befestigt sein. Insbesondere bevorzugt ist der Abstandhalter jedoch mit einem der beiden Verbinder verbunden und nur an dem anderen der beiden Verbinder lösbar befestigt, um die lösbare Befestigung des zweiten Verbinders mit dem ersten Verbinder bereitzustellen. Insbesondere bevorzugt kann der Abstandhalter auch einstückig mit dem jeweiligen Verbinder ausgeführt sein, mit dem er fest verbunden ist, beispielsweise wenn dieser erste Verbinder im Wege eines Urformverfahrens, insbesondere bevorzugt im Wege des Spritzgießens hergestellt wird.

In einer bevorzugten Ausführungsform kann der Abstandhalter dazu genutzt werden, den ersten Verbinder beabstandet vom zweiten Verbinder zu halten. Es sind Ausführungsformen bekannt, beispielsweise die in WO 01/40667 A1 und die in US 2008/0235919 A1 gezeigten Ausführungsformen, bei denen der erste Verbinder und der zweite Verbinder unmittelbar aneinandergrenzen. Dadurch wird ein flacher Befestiger geschaffen. Solche Ausführungsformen sind im Wesentlichen auch mit dem erfindungsgemäßen Befestiger erreichbar, wenn der Abstandhalter mit sehr geringer Längserstreckung ausgeführt wird. In einer bevorzugten Ausführungsform weist der Abstandhalter jedoch eine größere Länge auf. In dem bevorzugten Anwendungsgebiet der Erfindung, nämlich dem Befestigen eines Abdeckpaneels für ein Airbag an einer Struktur eines Fahrzeugs sind in der Praxis Ausführungsformen bekannt geworden, bei denen paneelseitig eine Aufnahme für den ihm zugeordneten Verbinder des Befestigers vorgesehen wurde, die sehr weit in den Innenraum des gebogen ausgeführten Paneels hineinragt. Diese Aufnahme wird notwendig, da der Befestiger sehr flach ausgebildet ist. In einer solchen Ausführungsform blockiert die Aufnahme an dem Abdeckpaneel jedoch innerhalb des Abdeckpaneels traversierende Leitungen oder Schläuche. Der bei dem erfindungsgemäßen Befestiger vorgesehene Abstandhalter erlaubt es, den ersten Verbinder in Abstand vom zweiten Verbinder anzuordnen. Dadurch baut der erfindungsgemäße Befestiger in dieser bevorzugten Ausführungsform zwar höher als die aus dem Stand der Technik bekannten Befestiger. Zugleich ermöglicht es jedoch eine schlanke Ausbildung des Abstandhalters, dass innerhalb eines gebogen ausgeführten Abdeckpaneels traversierende Kabel und Schläuche an des Abstandhalters vorbeigeführt werden können. Die Aufnahme des ihm zugeordneten Verbinders an dem Abdeckpaneel der bevorzugten Ausführungsform kann flacher ausgebildet werden und ragt somit nicht in den Innenraum des gebogen ausgeführten Abdeckpaneels hinein. In einer bevorzugten Ausführungsform weist der Abstandhalter eine Höhe von mehr als 5 mm, insbesondere von mehr als 10 mm und ganz besonders bevorzugt von mehr als 20 mm auf.

Die Querschnittsform des Abstandhalters muss entlang seiner Längserstreckung nicht gleichartig sein. Es sind fertigungstechnische Gründe, aber auch der Wunsch, den Kraftfluss durch den Abstandhalter zu beeinflussen, denkbar, die dazu führen, dass sich die Querschnittsform des Abstandhalters erheblich entlang seiner Längserstreckung ändert. Insbesondere bei einer Ausführungsform, bei der der erste Verbinder eine im Wesentlichen ebene, dem zweiten Verbinder zugewandte Fläche aufweist und bei der der Abstandhalter fest mit dem ersten Verbinder, insbesondere bevorzugt einstückig ausgeführt ist, wird alles Material, das sich über diese Fläche in Richtung auf den zweiten Verbinder hin erhebt, als des Abstandhalters zugehörig verstanden.

In einer bevorzugten Ausführungsform ist der Abstandhalter ein Würfel oder ein Zylinder oder eine anders als ein Würfel oder ein Zylinder geformte Stütze.

Der Abstandhalter hat entlang seiner Längserstreckung auch schon deshalb eine veränderliche Querschnittsform, da er einen Vorsprung aufweist, der in dem normalen Betriebszustand des Befestigers in den Raum innerhalb des gebogen ausgebildeten Teils des Rückhaltebandes hineinragt. Dieser Vorsprung erstreckt sich in eine Richtung senkrecht zur Längserstreckung des Abstandhalters. Dabei muss die Querschnittsform des Vorsprungs in Richtung seiner Erstreckung senkrecht zur Längserstreckung des Abstandhalters nicht gleichbleibende sein. Insbesondere bevorzugt nimmt die Querschnittsfläche des Vorsprungs mit zunehmender Entfernung von den übrigen Teilen des Abstandhalters ab. Dabei sind Ausführungsformen denkbar, bei denen der Vorsprung bezüglich einer senkrecht zur Längserstreckung des Abstandhalters stehenden Achse symmetrisch ausgeführt ist. Dies ist insbesondere dann zweckmäßig, wenn auch der gebogene Teil des Rückhaltebandes einen bezüglich einer Achse symmetrischen Bogen aufweist. In einer bevorzugten Ausführungsform ist der Vorsprung jedoch bezüglich allen sich senkrecht zur Längserstreckung des Abstandhalters senkrecht erstreckenden Achse asymmetrisch ausgeführt. Insbesondere bevorzugt ist der Vorsprung nasenförmig ausgebildet.

In einer bevorzugten Ausführungsform ist in dem normalen Betriebszustand des Befestigers ein Spalt zwischen dem Vorsprung und dem gebogen ausgeführten Teil des Rückhaltebandes vorgesehen. In der bevorzugten Ausführungsform kontaktiert der Vorsprung das Rückhalteband in dem normalen Betriebszustand des Befestigers somit an keiner Stelle. In einer bevorzugten Ausführungsform weist der Vorsprung in dem normalen Betriebszustand des Befestigers eine von dem ersten Verbinder fortweisende Oberfläche auf und zwischen der von dem ersten Verbinder fortweisenden Oberfläche und einer der von dem ersten Verbinder fortweisenden Oberfläche zuweisenden Oberfläche des Rückhalteband ein Spalt vorgesehen ist.

In einer besonders bevorzugten Ausführungsform weist der Spalt zumindest für einen Teil der Erstreckung des gebogenen Teils eine konstante Spaltbreite auf. Insbesondere bevorzugt weist der Spalt zwischen dem Vorsprung und dem gebogen ausgeführten Teil des Rückhaltebandes über die gesamte Erstreckung des gebogenen Teils des Rückhaltebandes eine konstante Spaltbreite auf. Die Spaltbreite beträgt insbesondere bevorzugt 0,5 mm und/oder mehr als 0,5 mm, insbesondere bevorzugt mehr 1 mm. In einer bevorzugten Ausführungsform beträgt die Spaltbreite in dem Bereich, wo sie konstant ist, weniger als 10 mm, insbesondere bevorzugt weniger als 5 mm, insbesondere bevorzugt weniger als 3 mm und ganz besonders bevorzugt weniger als 1,5 mm.

In einer bevorzugten Ausführungsform ist das Rückhalteband vollständig auf einer Seite einer Linie angeordnet, die das erste Ende des Befestigungsbandes und das zweite Ende des Befestigungsbandes miteinander verbindet. Damit ist der Punkt gemeint, an dem das erste Ende mit dem ersten Verbinder verbunden ist, bzw. das zweite Ende mit dem zweiten Verbinder verbunden ist. In einer ganz besonders bevorzugten Ausführungsform ist der Abstandhalter hauptsächlich auf der gegenüberliegenden Seite dieser Linie angeordnet, wobei nur der Vorsprung des Abstandhalters die Linie quert und in die dem Rückhalteband zugehörige Seite der Linie hineinragt.

Gemäß einem zweiten, insbesondere einem mit dem ersten kombinierbaren Aspekt der Erfindung ist ein erfindungsgemäßer Befestiger derart ausgeführt, dass das erste Ende des Befestigungsbands sich in dem normalen Betriebszustand des Befestigers im Wesentlichen in eine erste Richtung erstreckt und sich das zweite Ende des Rückhaltebandes in dem normalen Betriebszustand des Befestigers sich im Wesentlichen in eine zweite Richtung erstreckt, wobei die erste Richtung nicht parallel zu der zweiten Richtung verläuft und der eingeschlossene Winkel zwischen der ersten Richtung und der zweiten Richtung größer als 5°, insbesondere größer als 20°, insbesondere bevorzugt größer als 45° und insbesondere bevorzugt größer als 85° ist. Insbesondere bevorzugt ist der eingeschlossene Winkel zwischen der ersten Richtung und der zweiten Richtung kleiner als 135°, insbesondere bevorzugt kleiner als 120° und insbesondere bevorzugt kleiner als 95°.

Bei den aus WO 01/40667 A1 und US 2008/0235919 A1 bekannten Ausführungsformen von Befestigern ist das erste Ende des Rückhaltebandes mit dem ersten Verbinder und das zweite Ende des Rückhaltebandes mit dem zweiten Verbinder derart verbunden, dass die beiden Enden im normalen Betriebszustand des Befestigers im Wesentlichen parallel zueinander verlaufen. Dies hat insbesondere auch damit zu tun, dass sich das Rückhalteband seitlich von dem jeweiligen Verbinder fort erstreckt. Dies führt dazu, dass für den Einbau eines derartigen Befestigers ein großer Bauraum notwendig ist. Gemäß dem nun beschriebenen, zweiten Aspekt der Erfindung ist die erste Richtung, in die sich das erste Ende in dem normalen Betriebszustand erstreckt nicht parallel zu der zweiten Richtung, in die sich das zweite Ende des Rückhaltebandes in dem normalen Betriebszustand erstreckt. Der eingeschlossene Winkel zwischen den beiden Richtungen ist größer als 5°. Das führt dazu, dass sich zumindest eines der Enden des Rückhaltebandes gemäß diesem zweiten Aspekt der Erfindung nicht rein seitlich von dem ihm zugeordneten Verbinder erstreckt, sondern zumindest in einem Winkel im Verhältnis zur rein seitlichen Erstreckung. Je größer der Winkel im Verhältnis zur seitlichen Erstreckung von einem Verbinder gewählt wird, desto mehr erstreckt sich das Rückhalteband zumindest mit einem Teil seiner Erstreckung in die Vertikale (die von dem ersten Verbinder zum zweiten Verbinder führende Richtung) und nicht mehr so sehr in der Horizontalen (der seitlichen Richtung zu einem Verbinder). Dadurch kann der Raum, den der Befestiger in die horizontale Richtung einnimmt, reduziert werden. Dies ist insbesondere dann vorteilhaft, wenn sich der Befestiger mehr in die vertikale Richtung erstrecken soll, insbesondere bevorzugt bei solchen Ausführungsformen, bei denen er ein Abstandhalter gemäß dem ersten Aspekt der Erfindung aufweist.

In einer bevorzugten Ausführungsform dieses zweiten Aspekts der Erfindung ist das erste Ende des Rückhaltebandes derart mit dem ersten Verbinder verbunden, dass es sich im Wesentlichen in Richtung auf den zweiten Verbinder erstreckt. In einer besonders bevorzugten Ausführungsform dieser Ausführungsform ist das zweite Ende des Rückhaltebandes derart mit dem zweiten Verbinder verbunden, dass es sich im Wesentlichen seitlich von dem zweiten Verbinder und somit im rechten Winkel zu der Richtung, die zum ersten Verbinder weist, von dem zweiten Verbinder fort erstreckt. In einer ganz besonders bevorzugten Ausführungsform dieser Ausführungsform verbindet ein gebogen ausgeführter Teil des Rückhaltebandes das so ausgeführte erste Ende mit dem wie soeben beschrieben ausgeführten zweiten Ende dadurch, dass der gebogen ausgeführte Teil des Rückhaltebandes in einer seitlichen Draufsicht die Form eines sich über einen Winkel von 45° erstreckenden Kreisringsegments bildet oder gemäß einer alternativen Bauform eine Schlaufe bildet, die sich ausgehend von dem ersten Ende zunächst seitlich von den Verbindern fort erstreckt und dann in einem Bogen zurückgeführt wird, um dort das zweite Ende auszubilden.

Gemäß einem dritten, wahlweise mit dem ersten und/oder dem zweiten Aspekt der Erfindung kombinierbaren Aspekt der Erfindung ist ein Abstandhalter zwischen dem ersten Verbinder und dem zweiten Verbinder angeordnet, wobei sich der Abstandhalter entlang einer Längsrichtung erstreckt und das Verhältnis (LP/LR) zwischen der Längserstreckung (LP) des Abstandhalters in Richtung der Längsrichtung zu der Länge des Rückhaltebands (LR) durch die folgende Formel definiert wird: 1 < LP/LR < 2.

Als Länge des Rückhaltebandes (LR) wird dabei insbesondere die sich ggf. auch entlang eine gekrümmten Pfads erstreckende Erstreckung des Rückhaltebandes zwischen dem Punkt, an dem sein erstes Ende mit dem ersten Verbinder verbunden ist, und dem Punkt, an dem sein zweites Ende mit dem zweiten Verbinder verbunden ist, verstanden. Der Übergang zwischen dem dem Rückhalteband zuzuordnenden Ende und dem Verbinder, insbesondere bei einstückig ausgeführtem Ende und Verbinder, wird insbesondere als der Endpunkt des letzten Teils des Rückhaltebands vor dem Verbinder verstanden, das in sich eine konstante Querschnittsform hat. Ist beispielsweise ein einstückig mit dem Verbinder ausgeführtes Rückhalteband in seinem letzten Teil vor dem Verbinder beispielsweise mit rechteckigem Querschnitt ausgeführt und ändert sich dieser Querschnitt im Übergang zum Verbinder, so ist der Endpunkt des Rückhaltebandes, von dem aus die Länge des Rückhaltebandes (LR) zu messen ist, das Ende dieses Teils mit rechteckigem Querschnitt.

Die aus US 2008/0235919 A1 und WO 01/40667 A1 bekannten Bauformen weisen Rückhaltebänder auf, die im Verhältnis zum vertikalen Abstand zwischen dem ersten Verbinder und dem zweiten Verbinder eine sehr große Länge aufweisen. Die Länge des Rückhaltebandes definiert unter anderem den Weg, den sich das Paneel von der Struktur fort bewegen kann, wenn die Befestigung gelöst wird, ohne dass ein die Bewegung steuernder Eingriff erfolgt. Bei den aus US 2008/0235919 A1 und WO 01/40667 A1 bekannten Ausführungsformen entfaltet das Rückhalteband erst dann einen Einfluss auf die Richtung, in die sich das Paneel von der Struktur fort bewegt, wenn das Rückhalteband sich seiner gestrafften, gespannten Ausrichtung (seiner Ausrichtung entlang einer Geraden) nähert. Davor kann sich das Paneel nahezu vollkommen frei relativ zu der Struktur bewegen. Je mehr Weg das Paneel bei gelöster Befestigung sich relativ zu der Struktur bewegen muss, bis das Rückhalteband seine gestraffte, gespannte Position einnimmt, desto größer der Weg, in dem sich das Paneel dem Grunde nach chaotisch im Verhältnis zu der Struktur bewegen kann. Verkürzt man im Sinne des hier beschriebenen dritten Aspekts der Erfindung die Länge des Rückhaltebands, so wird dadurch der Weg reduziert, über den sich das Paneel bei gelöster Befestigung frei im Verhältnis zu der Struktur bewegen kann.

In einer bevorzugten Ausführungsform aller drei Aspekte der Erfindung hat der erste Verbinder einen Clip, der für ein Verbinden mit der Struktur geeignet ist. Ein Clip zeichnet sich meist durch mindestens ein Rückhalteelement aus, das einen in Bezug auf eine Einschubrichtung als Hinterschneidung ausgebildeten Widerhaken (stellvertretenden Verwendet für Rücksprung, rückwärtsweisende Endfläche eines Flügels; häufig auch als Schnapphaken bezeichnet) aufweist und das in Richtung senkrecht zur Einschubrichtung federnd ausgebildet ist. Dadurch wird erreicht, dass beim Einschieben des Clips in ein Loch, dessen Querschnitt kleiner ist als der Querschnitt des Clips im unmittelbar an den Widerhaken angrenzenden Bereich das Verbindungselement zunächst durch das Zusammenwirken einer an den Widerhaken angrenzenden Schrägfläche in Richtung senkrecht zur Einschubrichtung gedrückt wird und nachdem der Übergangspunkt zwischen der Schrägfläche und dem Widerhaken die Öffnung passiert hat in seine Ausgangsstellung zurückschnappt. Ein Herausziehen des Clips in zur Einschubrichtung entgegengesetzte Richtung wird dann dadurch verhindert, dass der Widerhaken aufgrund des größeren Querschnitts des Clips gegen die Wand stößt, in die das Loch mit geringerem Querschnitt eingebracht worden ist. Clips haben sich insbesondere beim Befestigen von Paneelen an Strukturen, insbesondere im Fahrzeugbereich, insbesondere in Automobilbereich durchgesetzt, da sie eine schnelle Montage ermöglichen und häufig ohne Einsatz von Werkzeugen, wie beispielsweise Schraubenziehern oder Nietenzangen angebracht werden können.

In einer bevorzugten Ausführungsform weist der Clip des ersten Verbinders eine Zugriffsöffnung aufweist, die einen Zugriff auf Verbindungselemente erlaubt, die mit Widerhaken des Clips verbunden sind. Die Zugriffsöffnung erstreckt sich vorzugsweise von der dem zweiten Verbinder zugewandten Seite des ersten Verbinders durch den ersten Verbinder. Die Widerhaken des Clips sind vorzugsweise auf der dem zweiten Verbinder abgewandten Seite vorgesehen. Die Zugriffsöffnung kann es somit erlauben, die Lage der Widerhaken auch von der den Widerhaken gegenüberliegenden Seite des ersten Verbinders, also von der Seite des zweiten Verbinders aus zu erkennen, bzw. zu prüfen. In einer bevorzugten Ausführungsform ist die Zugriffsöffnung mittig quer zur Längserstreckung des Clips angeordnet ist. In einer besonders bevorzugten Ausführungsform ist auch eine Zugriffsöffnung im zweiten Verbinder ausgeführt, vorzugsweise eine Zugriffsöffnung, die sich von der dem ersten Verbinder entfernten Seite des zweiten Verbinders durch den zweiten Verbinder auf den ersten Verbinder hin erstreckt. Ergänzend oder alternativ ist bei Ausführungsformen, die einen Abstandhalter aufweisen, in dem Teil des Befestigers, der den Abstandhalter aufweist, in Flucht mit der Zugriffsöffnung des ersten Verbinders und/oder des zweiten Verbinders kein Material vorgesehen oder soweit in diesem Bereich Material vorgesehen ist, weist dieses Material in Flucht mit der Zugriffsöffnung des ersten Verbinders und/oder des zweiten Verbinders eine eigene Zugriffsöffnung auf. Dadurch entsteht die Möglichkeit, von der mit den Widerhaken des Clips beabstandeten Seite des Befestigers Zugriff auf die Verbindungselemente des Clips zu haben. Hierdurch kann beispielsweise bei einem Blick durch die Zugriffsöffnung (bzw. die in Flucht zueinander angeordneten Zugriffsöffnungen) ermittelt werden, wie die Verbindungselemente des Clips relativ zu der im Sichtfeld des Betrachters liegenden Anordnung des Befestigers angeordnet sind. Beispielsweise ist es möglich, dass ermittelt werden kann, ob die Verbindungselemente und damit die an den Verbindungselementen des Clips vorliegenden Widerhaken die Struktur hintergreifen.

Die Erfindung schafft auch ein System, welches einen erfindungsgemäßen Befestiger und ein Einführelement umfasst. Der Clip weist einen Kanal auf, dessen Innenkontur in Abhängigkeit von dem Abstand zwischen zwei Widerhaken verändert werden kann, wobei die Widerhaken einen ausgefederten Zustand und einen zusammengedrückten Zustand aufweisen und das Einführelement in den Kanal einführbar ist, wenn die Widerhaken in dem ausgefederten Zustand sind. Insbesondere bevorzugt ist die Außenkontur des Einführelements größer als die Innenkontur des Kanals in dem zusammengedrückten Zustand. Es ist hierdurch möglich, festzustellen, ob ein sicheres Hintergreifen der Widerhaken vorliegt. Kann das Einführelement nicht in den Kanal eingeführt werden, so ist die Außenkontur des Einführelements größer als die vorliegende Innenkontur des Kanals und somit liegt ein Zustand vor, bei dem ein Abstand der beiden Widerhaken vorliegt, bei dem die Widerhaken die Struktur nicht sicher hintergreifen. Auf diese Weise kann ein sogenannter "Verbaunachweis" geführt werden. Kann das Einführelement nicht in den Kanal eingeführt werden, so sind die Widerhaken nicht in einer Position, bei der die Struktur hintergriffen wird. Zudem können die Widerhaken bei eingeführtem Einführelement in der die Struktur hintergreifenden Stellung gehalten werden.

Die Begriffe "Innenkontur" und "Außenkontur" umfassen einen (Teil-)Umfang des Kanals quer zu seiner Längserstreckung. Der Begriff "Kontur" umfasst dabei nicht notwendigerweise einen vollständigen Umfang quer zur Längserstreckung, sondern auch eine Einhüllende quer zur Längserstreckung bzw. einen relevanten Abstand quer zur Längserstreckung des Kanals, der Rückschlüsse über das sichere Hintergreifen der Widerhaken bietet. Der Begriff "Kontur" umfasst damit auch einen vorbestimmten Abstand zwischen zwei Elementen, der vorliegen muss, damit das Einführelement in den Kanal eingeführt werden kann.

In einer bevorzugten Ausführungsform sind die Widerhaken mit Verbindungselementen des Clips verbunden oder die Widerhaken sind an den Verbindungselementen des Clips angeformt, und ein oder mehrere Abschnitte an einem Verbindungselement bilden einen Innenkonturabschnitt des Kanals. Die "Innenkontur" kann damit auf den Abstand der Verbindungselemente der beiden Widerhaken reduziert sein. Nach dem Einschnappen des Clips müssen die Widerhaken in eine hintergreifende Stellung gelangen, wobei die jeweiligen Verbindungselemente einen größeren Abstand zueinander aufweisen, als in dem Falle, dass die Widerhaken in die Struktur eingeführt werden. Schnappt der Clip ein und hintergreifen damit die Widerhaken die Struktur, so wird der Abstand zwischen den Verbindungselementen größer; das Einführelement kann in den Kanal eingeführt werden.

In einer bevorzugten Ausführungsform sind in dem Kanal Gewindeabschnitte ausgebildet, die in Eingriff mit dem Einführelement, welches ein Gewinde aufweist, gelangen können. Das Einführelement kann damit als ein Außengewinde aufweisendes Element ausgestaltet sein. Neben der Möglichkeit zu bestimmen, ob das Einführelement ganz in den Kanal eingeschoben werden kann, besteht bei der Ausgestaltung des Einführelements mit Gewinde die Möglichkeit, dass das schraubenförmige Einführelement mit einem voreingestellten Drehmoment eingeschraubt werden kann. Hintergreifen die Widerhaken die Struktur nicht, so ist der Kanal zu klein bzw. die Kontur weist die entsprechende Größe nicht auf, sodass das Einführelement mit dem voreingestellten Drehmoment nicht in den Kanal eingeführt werden kann. In einer besonders bevorzugten Ausführungsform ist das Einführelement aus Metall gefertigt. In einer besonders bevorzugten Ausführungsform ist das Einführelement aus Kunststoff gefertigt. Der Begriff "Gewindeabschnitte" umfasst im Sinne der Erfindung am Kanal ausgebildete Kontaktbereiche, die in Eingriff mit dem am Einführelement ausgebildeten Gewinde gelangen und mit dem Gewinde des Einführelements zusammenwirken können.

In einer bevorzugten Ausführungsform ist das Einführelement ein Steckelement. Hierdurch kann der Verbaunachweis dadurch geführt werden, dass das Steckelement nur dann in den Kanal eingesteckt werden bzw. eintauchen kann, wenn die Widerhaken die Struktur hintergreifen. In einer besonders bevorzugten Ausführungsform umfasst das als Steckelement ausgestaltete Einführelement einen Kunststoff bzw. besteht aus diesem. In einer besonders bevorzugten Ausführungsform kann das Steckelement mit dem Befestiger, insbesondere mit dem zweiten Verbinder des Befestigers verrasten, damit der einmal "geführte" Verbaunachweis nicht durch ein Entfernen des Steckelements in Frage gestellt werden kann.

In einer bevorzugten Ausführungsform ist an dem Clip eine Halterung zum Halten des Einführelements ausgebildet. Hierdurch kann ein noch nicht verbauter Befestiger zusammen mit dem Einführelement, welches an dem Befestiger gehalten wird, einfach gehandhabt werden. Es kann eine einfach handhabbare Einheit des Systems umfassend den Befestiger und ein von dem Befestiger mittels der Halterung gehaltenes Einführelement geschaffen werden.

Das Einführelement kann mehrere Teile bzw. Abschnitte umfassen. Das Einführelement kann insbesondere zwei Teile oder mehrere Teile aufweisen, die zusammen das Einführelement ergeben. Insofern umfasst der Begriff "Einführelement" auch ein mehrteiliges Element, bei dem die einzelnen Teile beziehungsweise Abschnitte nicht notwendigerweise miteinander verbunden sind, sondern in Wirkrichtung (in Längsrichtung des Kanals) gehalten bzw. geführt werden können. Beispielsweise kann ein mehrteiliges Einführelement, welches als Steckelement ausgestaltet sein kann, mehrere in gleicher Wirkrichtung (Längsrichtung des Kanals) wirkende Steckelemente aufweisen. Durch die mehrteilige Ausgestaltung des Einführelements können beispielsweise entstehende Kräfte, die zu einem Bruch bei einer einteiligen Ausgestaltung führen würden, vermieden werden.

Es kann auch vorgesehen sein, dass in einer Ausführungsform das Einführelement eine Sollbruchstelle aufweist, die beim Ausüben einer vorbestimmten Kraft bricht, um eine vorbestimmte Stelle für einen Bruch vorzusehen.

In einer bevorzugten Ausführungsform kann das Einführelement über Anbindungen an die Aufnahme des ersten Verbinders angespritzt sein. Die Anbindungen können eine zusätzliche Führungsfunktion des Einführelements übernehmen. Die Anbindungen können das Einführelement in Kontakt halten.

In einer bevorzugten Ausführungsform sind seitliche Anschläge für das Einführelement vorgesehen, die das Einführelement zudem führen können. Die Anschläge können an den Aufnahmerahmen des zweiten Verbinders angespritzt sein. Hierdurch kann erreicht werden, dass eine Behinderung während eines Löseprozesses vom ersten und zweiten Verbinder verringert bzw. vermieden werden kann.

In einer bevorzugten Ausführungsform ist das Einführelement zumindest teilweise vom Abstandshalter umgeben, sodass sich ein besonders kompakter Befestiger ergibt, bei dem sich insbesondere keine Änderungen gegenüber üblichen Befestigern - ohne einen Verbaunachweis - ergibt. Es kann aber auch vorgesehen sein, dass das Einführelement oder Teile desselben zumindest teilweise in einer Erstreckung des Raumes den Befestiger überragen können, sodass eine einfache Beurteilung, ob das Einführelement in den Kanal eingeführt werden konnte, möglich ist, da das Einführelement von außen sichtbar ist/bleibt.

In einer bevorzugten Ausführungsform weist der zweite Verbinder eine Zugriffsöffnung auf das Einführelement auf, wobei die Zugriffsöffnung im Wesentlichen mittig über dem Kanal anordbar ist. Hierdurch kann erreicht werden, dass ein Verbaunachweis auch im normalen Betriebszustand, in dem das Rückhalteband nicht zurückgebogen ist, sondern die relative Lage des ersten Verbinders zum zweiten Verbinder fixiert ist, möglich ist.

In einer bevorzugten Ausführungsform ist der erste Verbinder zweiteilig ausgeführt und weist einen Grundkörper aus einem ersten Material, beispielsweise einem Kunststoffmaterial auf, während der Clip als separates Element, insbesondere bevorzugt als ein Element aus einem anderen Material, beispielsweise einem anderen Kunststoff, dabei insbesondere bevorzugt aus Metall ausgeführt ist. Der Clip kann mit dem Grundkörper dadurch verbunden werden, dass er mit dem Grundkörper vercrimpt wird. Es ist aber auch denkbar, dass der Clip mittels Klammern an dem Grundkörper des ersten Verbinders verklammert ist.

Der Einsatz eines Clips eignet sich insbesondere für den ersten Verbinder, um ein Verbinden mit der Struktur herbeizuführen. Zwar ist es auch denkbar, dass gemäß einer bevorzugten Ausführungsform der zweite Verbinder einen Clip hat, der für eine Verbindung mit dem Paneel geeignet ist. Häufig wird für das Verbinden des zweiten Verbinders mit einer Aufnahme an dem Paneel jedoch eine andere Technologie gewünscht, der entsprechend der zweite Verbinder ausgeführt sein kann. Beispielsweise kann am zweiten Verbinder ein Kopf ausgeführt sein, der von der Seite in eine Aufnahme in dem Paneel eingeschoben wird. Es ist denkbar, dass bei der Montage eines Abdeckpaneels für ein Airbag die Verbindung zwischen dem Abdeckpaneel und dem zweiten Verbinder des erfindungsgemäßen Befestigers in einem ersten Arbeitsschritt, wohl möglich bei einem Zulieferer erfolgt. In diesem Zustand ist häufig mehr Raum vorhanden. Der Monteur kommt besser an das Abdeckpaneel heran. Deshalb kann die Art der Verbindung zwischen dem zweiten Verbinder und einer Aufnahme des Abdeckpaneels so gewählt werden, dass sie den zu erwartenden Belastungen besonders gut standhält. Hier steht die einfache Montierbarkeit des zweiten Verbinders an der Aufnahme des Abdeckpaneels möglicherweise nicht so sehr im Vordergrund. Für das Befestigen eines so vorbereiteten Abdeckpaneels mit der Struktur eines Fahrzeugs, beispielsweise einem Dachholm, wenn ein Abdeckpaneel für ein Seitenairbag montiert werden soll, spielt jedoch auch die Montierbarkeit eine große Rolle. Deshalb werden zum Herstellen der Verbindung zwischen dem ersten Verbinder und der Struktur Clips bevorzugt, da diese auch bei engem Bauraum gut und sicher montiert werden können.

In einer bevorzugten Ausführungsform ist der Abstandhalter an seinem ersten Ende fest mit dem ersten Verbinder verbunden, insbesondere bevorzugt einstückig mit dem ersten Verbinder ausgeführt und an seinem zweiten Ende lösbar mit dem zweiten Verbinder befestigt. Dies führt dazu, dass beim Lösen der Befestigung sich der Abstandhalter zusammen mit dem ersten Verbinder relativ zum zweiten Verbinder bewegt (wobei es bei dieser Ausführungsform zunächst offen bleibt, ob der erste Verbinder relativ zum zweiten Verbinder oder der zweite Verbinder relativ zum ersten Verbinder bewegt wird). In einer alternativen Ausführungsform ist der Abstandhalter an seinem ersten Ende fest mit dem zweiten Verbinder verbunden, insbesondere bevorzugt einstückig mit diesem ausgeführt und an seinem zweiten Ende lösbar mit dem ersten Verbinder befestigt. Bei dieser Ausführungsform bewegt sich der Abstandhalter mit dem zweiten Verbinder relativ zum ersten Verbinder (wobei auch bei dieser Ausführungsform zunächst offen bleibt, ob sich der zweite Verbinder relativ zum ersten Verbinder bewegt oder der erste Verbinder relativ zum zweiten Verbinder bewegt).

In einer besonders bevorzugten Ausführungsform ist der Abstandhalter an seinem ersten Ende fest mit dem ersten Verbinder verbunden, wobei ein Kopf von dem zweiten Ende des Abstandhalters vorragt und lösbar zwischen zwei Klammern, die an dem zweiten Verbinder vorgesehen sind, aufgenommen wird. Das Zusammenwirken zwischen einem Kopf und zwei ihn haltenden Klammern ermöglicht es, eine im normalen Betriebszustand gute und feste Befestigung bereitzustellen, die aber nach Erreichen eines bestimmten Kraftniveaus auch einfach gelöst werden kann.

In einer besonders bevorzugten Ausführungsform ist der Abstandhalter an seinem ersten Ende fest mit dem zweiten Verbinder verbunden, wobei ein Kopf von dem zweiten Ende des Abstandhalters vorragt und lösbar zwischen zwei Klammern, die an dem ersten Verbinder vorgesehen sind, aufgenommen wird. Das Zusammenwirken zwischen einem Kopf und zwei ihn haltenden Klammern ermöglicht es, eine im normalen Betriebszustand gute und feste Befestigung bereitzustellen, die aber nach Erreichen eines bestimmten Kraftniveaus auch einfach gelöst werden kann.

In einer bevorzugten Ausführungsform ist der Abstandhalter an seinem ersten Ende fest mit dem ersten Verbinder verbunden, wobei ein Kopf von dem zweiten Ende des Abstandhalters vorragt und lösbar zwischen zwei Klammern, die an dem zweiten Verbinder vorgesehen sind, aufgenommen wird, wobei der zweite Verbinder eine flache, dem ersten Verbinder zugewandte Oberfläche mit einem Loch aufweist und die zwei Klammern das Loch in Richtung auf den ersten Verbinder durchgreifen, wobei der Knopf durch die beiden Klammern oberhalb des Lochs und auf der Seite der Oberfläche gehalten wird, auf der auch der erste Verbinder angeordnet ist.

In einer bevorzugten Ausführungsform ist der Abstandhalter an seinem ersten Ende fest mit dem zweiten Verbinder verbunden ist, wobei ein Kopf von dem zweiten Ende des Abstandhalters vorragt und lösbar zwischen zwei Klammern, die an dem ersten Verbinder vorgesehen sind, aufgenommen wird, wobei der erste Verbinder eine flache, dem zweiten Verbinder zugewandte Oberfläche mit einem Loch aufweist und die zwei Klammern das Loch in Richtung auf den zweiten Verbinder durchgreifen, wobei der Knopf durch die beiden Klammern oberhalb des Lochs und auf der Seite der Oberfläche gehalten wird, auf der auch der zweite Verbinder angeordnet ist.

In einer besonders bevorzugten Ausführungsform ist der Abstandhalter an seinem ersten Ende fest mit dem ersten Verbinder verbunden, wobei ein Kopf von dem zweiten Ende des Abstandhalters vorragt und lösbar zwischen zwei Klammern, die an dem zweiten Verbinder vorgesehen sind, aufgenommen wird, wobei der zweite Verbinder eine flache Kontaktfläche zum Kontakt mit dem Paneel aufweist, die in einer Ebene angeordnet ist, und wobei die zwei Klammern zumindest teilweise auf der Seite der Ebene angeordnet sind, auf der auch der erste Verbinder angeordnet ist. Insbesondere bevorzugt sind die zwei Klammern so angeordnet, dass der Kopf vollständig auf der Seite der Ebene zwischen den Klammern gehalten wird, auf der auch der erste Verbinder angeordnet ist. Eine solche Anordnung des Kopfs oberhalb der Ebene bietet eine Vielzahl von Möglichkeiten, den Kopf zwischen den Klammern herauszubewegen, ohne dass der Kopf mit anderen Elementen des ersten Verbinders blockiert oder verhakt.

In einer besonders bevorzugten Ausführungsform ist der Abstandhalter an seinem ersten Ende fest mit dem zweiten Verbinder verbunden, wobei ein Kopf von dem zweiten Ende des Abstandhalters vorragt und lösbar zwischen zwei Klammern, die an dem ersten Verbinder vorgesehen sind, aufgenommen wird, wobei der erste Verbinder eine flache Kontaktfläche zum Kontakt mit dem Paneel aufweist, die in einer Ebene angeordnet ist, und wobei die zwei Klammern zumindest teilweise auf der Seite der Ebene angeordnet sind, auf der auch der zweite Verbinder angeordnet ist. Insbesondere bevorzugt sind die zwei Klammern so angeordnet, dass der Kopf vollständig auf der Seite der Ebene zwischen den Klammern gehalten wird, auf der auch der zweite Verbinder angeordnet ist. Eine solche Anordnung des Kopfs oberhalb der Ebene bietet eine Vielzahl von Möglichkeiten, den Kopf zwischen den Klammern herauszubewegen, ohne dass der Kopf mit anderen Elementen des ersten Verbinders blockiert oder verhakt.

In einer bevorzugten Ausführungsform besteht der Befestiger aus Kunststoff, in einer bevorzugten Ausführungsform ist der Befestiger durch ein Spritzgußverfahren hergestellt. In einer alternativen Ausführungsform weist der Befestiger verschiedenen Materialien auf. Beispielsweise können der zweite Verbinder und das Rückhalteband aus einem ersten Kunststoff hergestellt sein, während der erste Verbinder einen Grundkörper aufweist, der ebenfalls aus einem zweiten, vom ersten verschiedenen, Kunststoff hergestellt ist und einen mit dem Grundkörper vercrimpten, aus Metall hergestellten Clip aufweist.

Das erfindungsgemäße Abdeckpaneel für ein Airbag weist insbesondere einen erfindungsgemäßen Befestiger auf, der so mit dem Abdeckpaneel verbunden ist, dass der zweite Verbinder mit dem Abdeckpaneel verbunden ist. Gerade in dem bevorzugten Einsatzgebiet der Seiten- oder Kopfairbags, insbesondere bei vorhangartigen Airbags hat es sich als zweckmäßig gezeigt, die Bewegung des Paneels relativ zu der Struktur, meist einem Dachholm des Fahrzeugs, bzw. der A-Säule des Fahrzeugs zu kontrollieren. Dies lässt sich insbesondere mit dem erfindungsgemäßen Befestiger gut realisieren. So ist mit dem erfindungsgemäßen Befestiger ein Verschwenken des Abdeckpaneels in Richtung auf den Dachhimmel möglich. Bei diesem kurzen Bewegungsweg ist das Risiko, dass das sich verschwenkende Abdeckpaneel einen Passagier des Fahrzeugs trifft sehr gering.

In einer bevorzugten Ausführungsform erstreckt sich das Abdeckpaneel im Wesentlichen entlang einer Längsrichtung. In einer besonders bevorzugten Ausführungsform erstreckt sich die Ebene, in der der gebogene Teil des Rückhaltebandes liegt, in eine Richtung senkrecht zur Längserstreckung des Abdeckpaneels.

Das erfindungsgemäße Fahrzeug weist eine Struktur, insbesondere bevorzugt einen Rahmen und ein Airbag und ein erfindungsgemäßes Abdeckpaneel für das Airbag auf. Wobei das Airbag zwischen dem Abdeckpaneel und der Struktur angeordnet ist und wobei der Befestiger dadurch an der Struktur befestigt ist, dass der erste Verbinder mit der Struktur verbunden ist.

Der erfindungsgemäße Befestiger findet insbesondere bevorzugt beim lösbaren Befestigen eines Paneels an einer Struktur eines Fahrzeugs, insbesondere bevorzugt eines Automobils Anwendung.

Nachfolgenden wird die Erfindung anhand einer lediglich Ausführungsbeispiele der erfindungsgemäßen Vorrichtung darstellenden Zeichnung näher erläutert.

Darin zeigen:
- Fig. 1: eine erste Ausführungsform des erfindungsgemäßen Befestigers in einer perspektivischen Ansicht ohne eingebauten Clip des ersten Verbinders, der in der Fig. 2 dargestellt ist;
- Fig. 2: eine perspektivische Ansicht eines Clips, der als Teil des ersten Verbinders des erfindungsgemäßen Befestigers gemäß Fig. 1 eingesetzt werden kann;
- Fig. 3: den erfindungsgemäßen Befestiger gemäß Fig. 1 in zusammengesetzter Form (im normalen Betriebszustand);
- Fig. 4: ein erfindungsgemäßes Abdeckpaneel mit einem von ihm abgedeckten Airbag in einer perspektivischen Ansicht unter Verwendung eines erfindungsgemäßen Befestigers gemäß Fig. 3;
- Fig. 5: eine perspektivische Ansicht eines möglichen Montageschritts des erfindungsgemäßen Abdeckpaneels mit einem Airbag an einer Struktur eines Fahrzeugs;
- Fig. 6: den Betriebszustand, wenn sich die Befestigung des Paneels an der Struktur dadurch gelöst hat, dass die Befestigung zwischen dem mit dem zweiten Verbinder fest verbundenen Abstandhalter und dem ersten Verbinder gelöst hat;
- Fig. 7: eine Seitenansicht einer zweiten Ausführungsform des erfindungsgemäßen Befestigers in seinem normalen Betriebszustand und ohne Darstellung des zu dem ersten Verbinder zugehörigen Clips;
- Fig. 8: die Seitenansicht gemäß Fig. 7, wobei die zweite Ausführungsform des Befestigers sich in einem Zustand befindet, bei dem die Verbindung zwischen dem Paneel und der Struktur gelöst wurde und sich der zweite Verbinder linear von dem ersten Verbinder fort bewegt;
- Fig. 9: die Seitenansicht gemäß Fig. 8 in einem Betriebszustand, bei dem sich der zweite Verbinder soweit von dem ersten Verbinder fort bewegt hat, dass der Vorsprung des Abstandhalters im Kontakt mit dem Rückhalteband zu einem Verschwenken des zweiten Verbinders relativ zum ersten Verbinder führt;
- Fig. 10: die Ansicht gemäß Fig. 9 der Vollständigkeit halber mit dem zum ersten Verbinder zugehörigen Clip;
- Fig. 11: eine weitere Ausführungsform des erfindungsgemäßen Befestigers in einer perspektivischen Ansicht mit Clip des ersten Verbinders und ein Einführelement;
- Fig. 12: eine teilweise geschnittene Darstellung der Fig. 11;
- Fig. 13: die Ausführungsform gemäß Fig. 11 mit in den Clip eingeführtem Einführelement in einer perspektivischen Ansicht;
- Fig. 14: eine teilweise geschnittene Darstellung der Fig. 13;
- Fig. 15: die Ausführungsform der Fig. 11 in einer perspektivischen Ansicht mit zurückgebogenem Befestigungsband und eingeführtem Einführelement;
- Fig. 16: eine teilweise geschnittene Darstellung der Fig. 15;
- Fig. 17: eine weitere Ausführungsform des erfindungsgemäßen Befestigers in einer perspektivischen Ansicht mit Einführelement;
- Fig. 18: eine teilweise geschnittene Darstellung der Fig. 17;
- Fig. 19: eine weitere Ausführungsform des erfindungsgemäßen Befestigers in einer perspektivischen Ansicht mit einem Einführelement in einem unverbauten Zustand;
- Fig. 20: die Ausführungsform gemäß Fig. 19 in einer teilgeschnittenen Darstellung von der Seite;
- Fig. 21: die Ausführungsform gemäß Fig. 19 in einem verbauten Zustand in einer perspektivischen Ansicht;
- Fig. 22: die Ausführungsform gemäß Fig. 19 im verbauten Zustand in einer teilweise geschnittenen Darstellung von der Seite;
- Fig. 23: eine weitere Ausführungsform des erfindungsgemäßen Befestigers in einer perspektivischen Ansicht mit einem Einführelement in einem unverbauten Zustand;
- Fig. 24: die Ausführungsform gemäß Fig. 23 in einer teilgeschnittenen Darstellung von der Seite;
- Fig. 25: die Ausführungsform gemäß Fig. 23 in einem verbauten Zustand in einer teilweise geschnittenen Darstellung von der Seite; und
- Fig. 26: eine weitere Ausführungsform des erfindungsgemäßen Befestigers in einer perspektivischen Ansicht mit einem Einführelement in einem unverbauten Zustand.

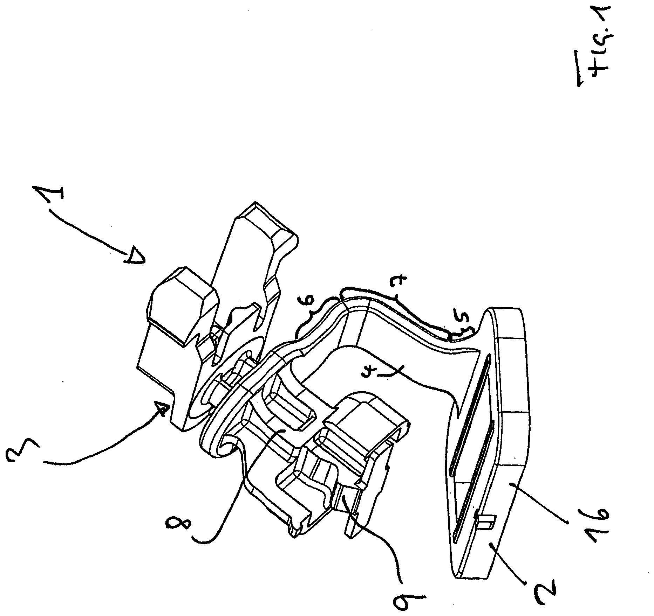

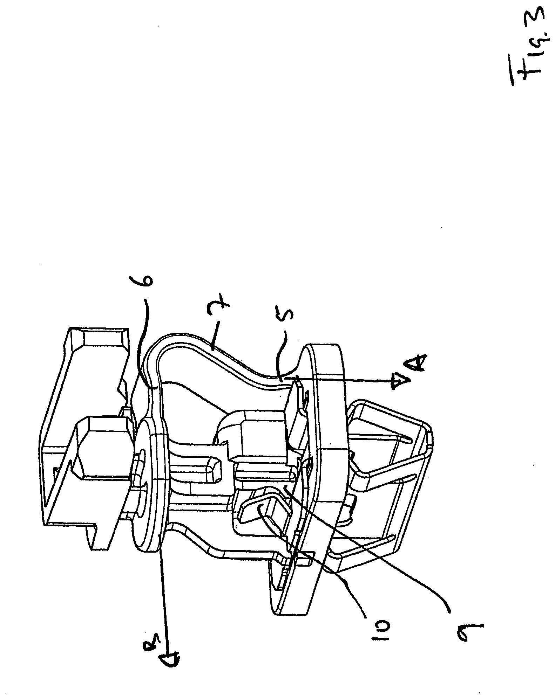

Fig. 1 zeigt einen erfindungsgemäßen Befestiger 1 zum lösbaren Befestigen eines (in der Fig. 1 nicht dargestellten) Paneels an einer (in der Fig. 1 nicht dargestellten) Struktur, wobei der Befestiger 1 einen ersten Verbinder 2 zum Verbinden des Befestigers mit der Struktur und einen zweiten Verbinder 3 zum Verbinden des Befestigers mit dem Paneel aufweist, wobei der zweite Verbinder 3 in dem normalen Betriebszustand des Befestigers 1 (vgl. Fig. 3) lösbar mit dem ersten Verbinder 2 befestigt ist. Ferner weist der Befestiger 1 ein Rückhalteband 4 auf. Das Rückhalteband 4 hat ein erstes, in der hier dargestellten Ausführungsform sich entlang einer Geraden erstreckendes erstes Ende 5. Das erste Ende 5 ist fest mit dem ersten Verbinder 2 dadurch verbunden, dass das erste Ende 5 einstückig mit dem ersten Verbinder 2 ausgeführt ist. Ferner weist das Rückhalteband 4 ein zweites Ende 6 auf, das sich in der hier dargestellten Ausführungsform ebenfalls entlang einer Geraden erstreckt. Das zweite Ende 6 ist dadurch fest mit dem zweiten Verbinder 3 verbunden, dass es einstückig mit dem zweiten Verbinder 3 ausgeführt ist. Der zwischen dem ersten Ende 5 und dem zweiten Ende 6 liegende Teil 7 des Rückhaltebands 4 weist in dem in der Fig. 3 dargestellten normalen Betriebszustand des Befestigers 1 eine gebogene Form auf.

Zwischen dem ersten Verbinder 2 und dem zweiten Verbinder 3 ist ein Abstandhalter 8 vorgesehen. Der Abstandhalter 8 ist mit dem zweiten Verbinder 3 dadurch fest verbunden, dass sein erstes Ende einstückig mit dem zweiten Verbinder 3 ausgeführt ist. An dem gegenüberliegenden, zweiten Ende des Abstandhalters 8 ragt ein Kopf 9 vor. Dieser wird im normalen Betriebszustand lösbar zwischen zwei Klammern 10, 11 des ersten Verbinders 2 aufgenommen. Der erste Verbinder 2 weist an seinem Grundkörper 16 eine flache, dem zweiten Verbinder 3 zugewandte Oberfläche mit einem Loch auf, wobei die zwei Klammern 10,11 das Loch in Richtung auf den zweiten Verbinder 3 durchgreifen, wobei der Knopf 9 durch die beiden Klammern 10,11 oberhalb des Lochs und auf der Seite der Oberfläche gehalten wird, auf der auch der zweite Verbinder 3 angeordnet ist.

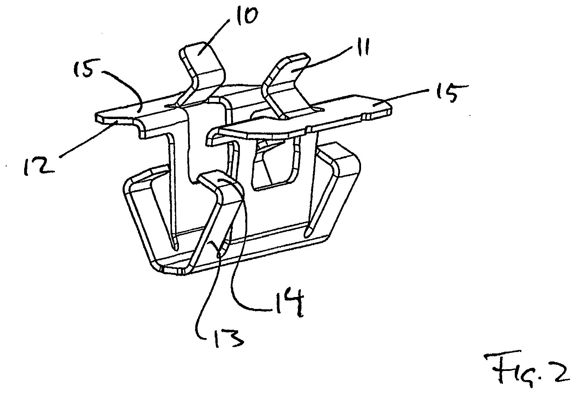

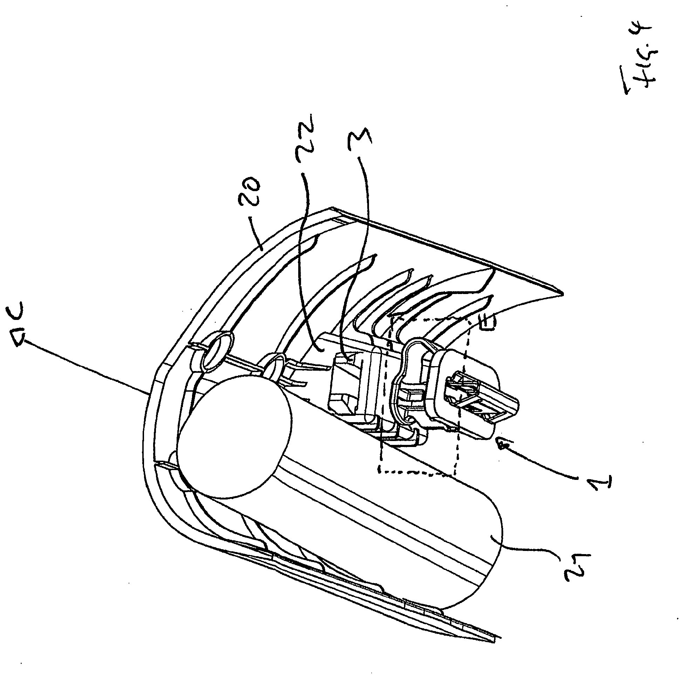

Wie aus Fig. 3 und der Zusammenschau von Fig. 1 und 2 ersichtlich, weist der erste Verbinder 2 einen Clip 12 auf. Dieser weist vier Verbindungselemente 13 mit jeweils einem Widerhaken (Schnapphaken) 14 auf. Der Clip 12 liegt mit Kontaktflächen 15 an einer Kontaktfläche eines Grundkörpers 16 des ersten Verbinders 2 an (vgl. Fig. 3). In dieser Position wird er durch Rastnasen (nicht näher dargestellt), die an dem Grundkörper 16 ausgeführt sind gehalten. Wie aus der perspektivischen Ansicht der Fig. 4 ersichtlich, sind die Widerhaken 14 beabstandet von der Unterseite des Grundkörpers 16. Sie hintergreifen die Struktur 25, mit der der erfindungsgemäße Befestiger das Paneel 20 befestigt.

Aus der Fig. 3 ist ersichtlich, dass sich das erste Ende 5 des Befestigungsbands 4 in dem normalen Betriebszustand des Befestigers 1 im Wesentlichen in eine erste Richtung A erstreckt und sich das zweite Ende 6 des Rückhaltebandes 4 in dem in Fig. 3 dargestellten normalen Betriebszustand des Befestigers 1 im Wesentlichen in eine zweite Richtung B erstreckt. Die erste Richtung A ist nicht parallel zur zweiten Richtung B. Der eingeschlossene Winkel zwischen der ersten Richtung A und der zweiten Richtung B ist größer als 5° und beträgt bei der in Fig. 3 dargestellten Ausführungsform in etwa 90°.

Der erfindungsgemäße Befestiger 1 weist eine flache Kontaktfläche zum Kontakt mit der Struktur auf (die Unterseite des Grundkörpers 16). Diese Kontaktfläche ist in einer Ebene angeordnet. Die zwei Klammern 10, 11 des Clips 12 befinden sich vollständig auf der Seite der Ebene, auf der auch der zweite Verbinder 3 angeordnet ist. Bei der hier dargestellten Ausführungsform weist der Grundkörper 16 eine in dem normalen Betriebszustand dem zweiten Verbinder 3 zugewandte Fläche auf, die sich ebenfalls in einer Ebene befindet, wobei die zwei Klammern 10, 11 vollständig auf der Seite dieser Ebene angeordnet sind, auf der auch der zweite Verbinder 3 angeordnet ist.

In Fig. 4 ist das erfindungsgemäße Abdeckpaneel 20 dargestellt. Das Abdeckpaneel 20 weist eine Längserstreckung in Richtung C auf und ist so gekrümmt ausgeführt, dass es ein in der Fig. 4 ebenfalls dargestelltes Airbag 21 abdecken kann, das zwischen dem Abdeckpaneel 20 und einer (in der Fig. 4 nicht dargestellten) Struktur eines Fahrzeugs angeordnet ist. Das Airbagpaneel 20 weist eine Aufnahme 22 auf. Über diese Aufnahme 22 ist der erfindungsgemäße Befestiger 1 mit dem Abdeckpaneel verbunden. Dies erfolgt dadurch, dass der zweite Verbinder 3 mit dem Abdeckpaneel 20 verbunden ist. Hierzu ist der zweite Verbinder 3 der Geometrie der Aufnahme 22 entsprechend ausgeführt.

Die Fig. 4 zeigt ebenfalls, dass sich das Rückhalteband 4 in einer Ebene E erstreckt, die senkrecht zu der Längserstreckung C des Abdeckpaneels 20 verläuft.

Die Fig. 5 zeigt, wie das Abdeckpaneel 20 und das Airbag 21 mit der Struktur 25 eines Fahrzeugs, insbesondere mit der A-Säule eines Fahrzeugs verbunden wird. Dies erfolgt dadurch, dass der Clip 12 des ersten Verbinders 2 in eine Öffnung 26 der Struktur 25 eingeführt wird. Der Durchmesser, bzw. die größte Erstreckung der Öffnung 26 ist kleiner als der Durchmesser, bzw. die größte Erstreckung des Clips 12 im Bereich des Übergangs einer Schrägfläche des Verbindungselements 13 zu dem Widerhaken 14. Dadurch werden die Verbindungselemente 13 beim Einschieben des Clips 12 in die Öffnung 26 zunächst in einer Richtung senkrecht zur Einschieberichtung zusammengedrückt und schnappen dann nach Passieren der Öffnung wieder nach außen. Dadurch blockieren sie ein Herausziehen des Befestigers weg von der Struktur 25.

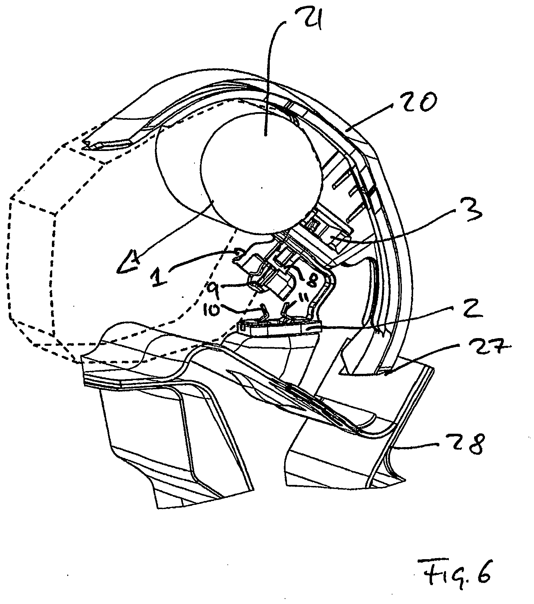

In Fig. 6 ist gezeigt, dass sich bei einem Auslösen des Airbags 21 das Abdeckpaneel 20 aufgrund der Volumenvergrößerung des Airbags 21 von der Struktur fort bewegt. Dadurch wird die Befestigung zwischen des Abstandhalters 8 und damit zwischen dem zweiten Verbinder 3 und dem ersten Verbinder 1 gelöst. Der Kopf 9 wird aus der Umklammerung der Klammern 10, 11 herausgezogen. Dabei strafft sich das Rückhalteband 4 und führt dazu, dass der zweite Verbinder 3 relativ zum ersten Verbinder 2 eine Schwenkbewegung um den Kontakt zwischen einer Kante 27 des Abdeckpaneels 20 und einer Fläche eines Fortsatzes 28 der Struktur 25 vollzieht.

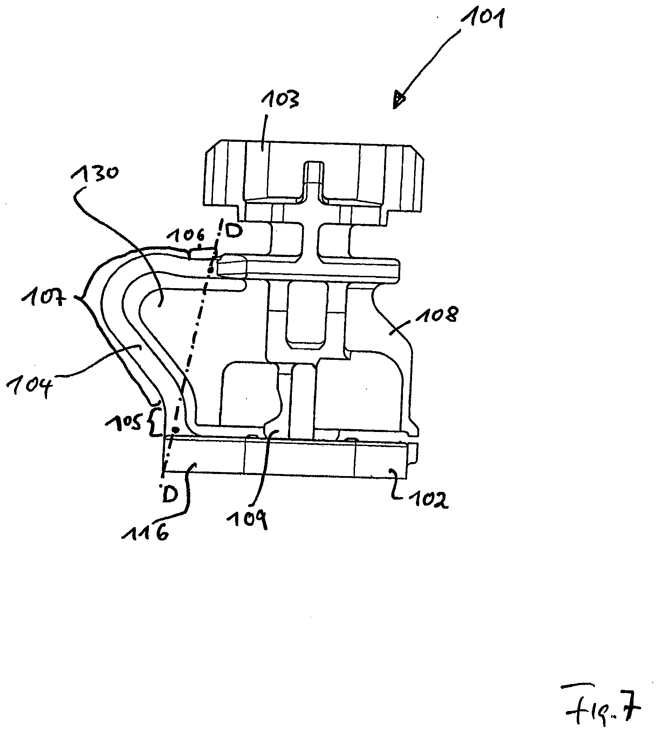

In den Fig. 7, 8, 9 und 10 wird eine zu der in den Fig. 1 bis 6 dargestellten ersten Ausführungsform leicht unterschiedliche zweite Ausführungsform beschrieben. Neben geometrischen Änderungen in der Querschnittsfläche des Abstandhalters 8 und in der Art der Ausführung der Verbindungselemente des zweiten Verbinders 3 zum Verbinden mit einer Aufnahme 22 des Abdeckpaneels unterscheidet sich die in den Fig. 7 bis 10 dargestellte Ausführungsform von der in den Fig. 1 bis 6 dargestellten Ausführungsform insbesondere dadurch, dass der Abstandhalter 108 einen Vorsprung aufweist, der in dem normalen Betriebszustand des Befestigers 101 in den Raum innerhalb des gebogen ausgebildeten Teils 107 des Rückhaltebands 104 hineinragt. Bei der Beschreibung der in den Fig. 7 bis 10 dargestellten zweiten Ausführungsform wurden die zu der ersten Ausführungsform vergleichbaren Bezugszeichen um den Wert 100 erhöht. Zur Vereinfachung werden nur die Unterschiede zu der ersten Ausführungsform beschrieben.

Bei der zweiten Ausführungsform ist ersichtlich, dass das erste Ende 105 sich ebenfalls entlang einer Geraden erstreckt. Ebenso erstreckt sich das zweite Ende 106 des Rückhaltebands 104 entlang einer Geraden. Wie bei der ersten Ausführungsform ist der gebogen ausgeführte Teil 107 nach Art einer Schlaufe ausgeführt.

Der Abstandhalter 108 weist einen Vorsprung 130 auf, der in den Raum innerhalb des gebogen ausgebildeten Teils 107 des Rückhaltebands 104 hineinragt. Dabei kontaktiert der Vorsprung 130 in dem normalen Betriebszustand (vgl. Fig. 7) des Befestigers 101 das Rückhalteband 104 nicht. In dem normalen Betriebszustand des Befestigers 101 ist ein Spalt zwischen dem Vorsprung 130 und dem gebogen ausgeführten Teil 107 des Rückhaltebands 104 ausgeführt. Wie in der Fig. 7 ersichtlich, ist das Rückhalteband vollständig auf einer Seite einer Linie D-D angeordnet, die den Punkt des Übergangs des ersten Endes 106 des Befestigungsbands 104 zu dem Grundkörper 116 und den Kontaktpunkt des zweiten Endes 106 des Befestigungsbands mit dem zweiten Verbinder 103 verbindet, angeordnet. Der Abstandhalter 108 ist hauptsächlich (mit Ausnahme eines vernachlässigbaren Teils der Verbindungselemente des zweiten Verbinders 103 mit der Aufnahme des Abdeckpaneels) auf der gegenüberliegenden Seite der Linie D-D angeordnet. Nur der Vorsprung 130 quert die Linie D-D und ragt in die dem Rückhalteband 104 zugeordnete Seite der Linie hinein.

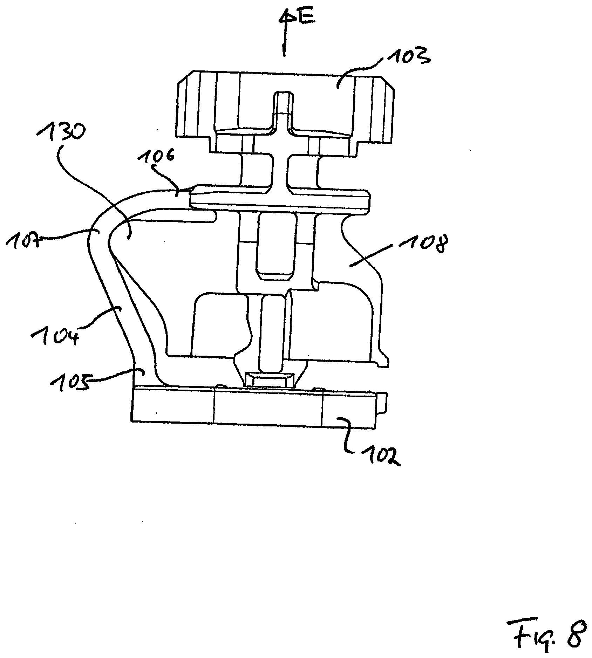

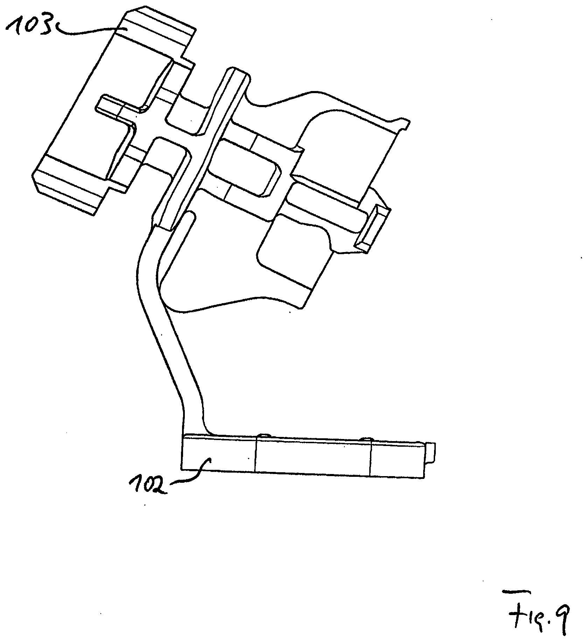

Die Fig. 8 zeigt, dass wenn der zweite Verbinder 103 linear von dem ersten Verbinder 102 in Richtung des Pfeils E fort bewegt wird und damit die Befestigung zwischen dem Kopf 109 und den (in der Fig. 8 nicht dargestellten) Klammern 110, 111 des Clips 112 gelöst wird, dass Rückhalteband 104 zunehmend gespannt wird und der Vorsprung 130 in Kontakt mit dem Rückhalteband 104 kommt. Dies bewirkt - wie in Fig. 9 dargestellt - dass ein Drehpunkt erzeugt wird, um den sich der zweite Verbinder 103 relativ zum ersten Verbinder 102 verschwenkt. Dadurch wird aus einer zunächst linearen Bewegung des zweiten Verbinders 103 relativ zum ersten Verbinder 102 eine Schwenkbewegung. Somit kann die Bewegung des zweiten Verbinders 103 und damit des mit ihm verbundenen Paneels relativ zum ersten Verbinder 102 und der damit verbundenen Struktur kontrolliert werden.

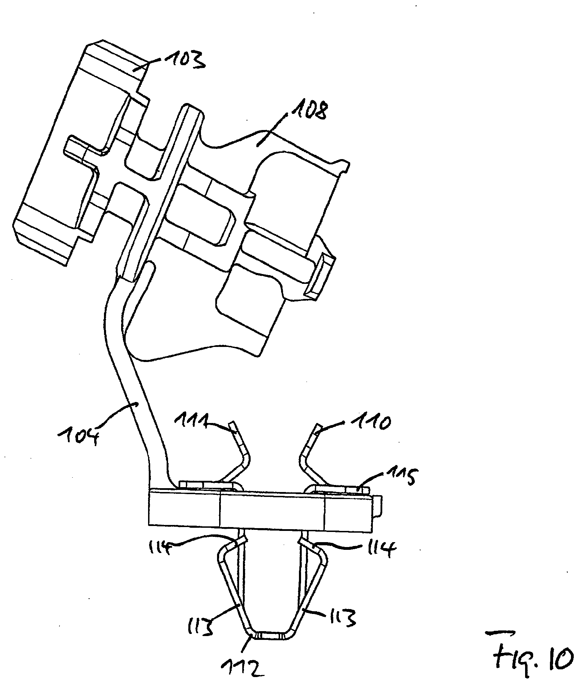

Die Fig. 10 zeigt zur Vervollständigung, dass der erste Verbinder 102 einen zu dem in der Fig. 2 dargestellten Clip 12 vergleichbaren Clip 112 aufweist.

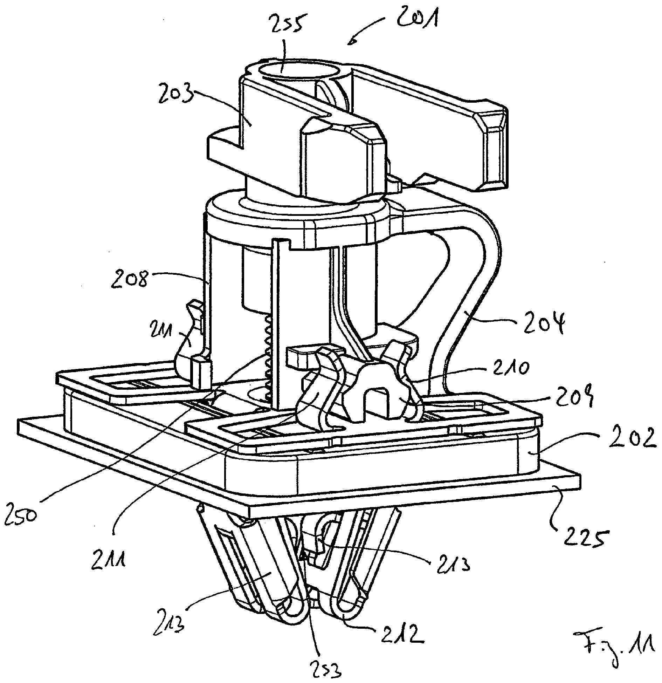

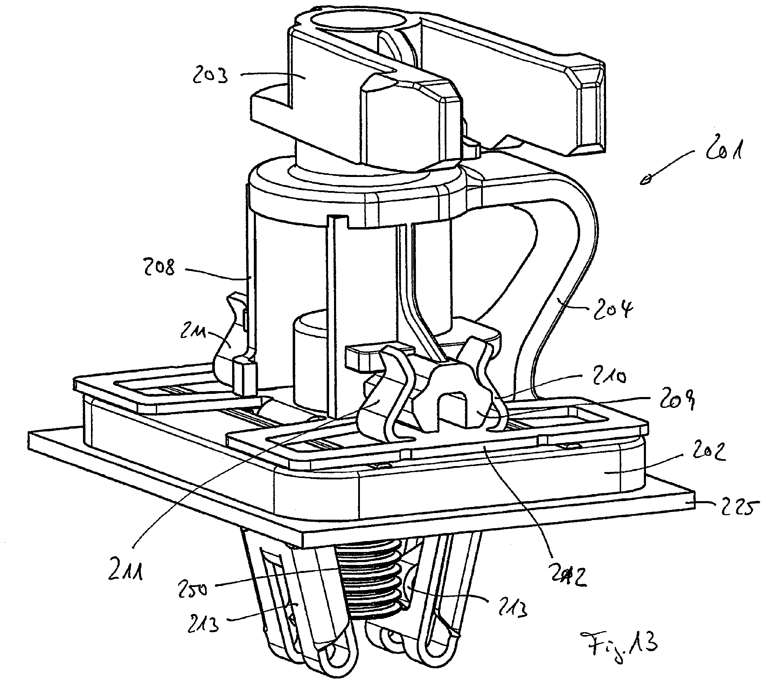

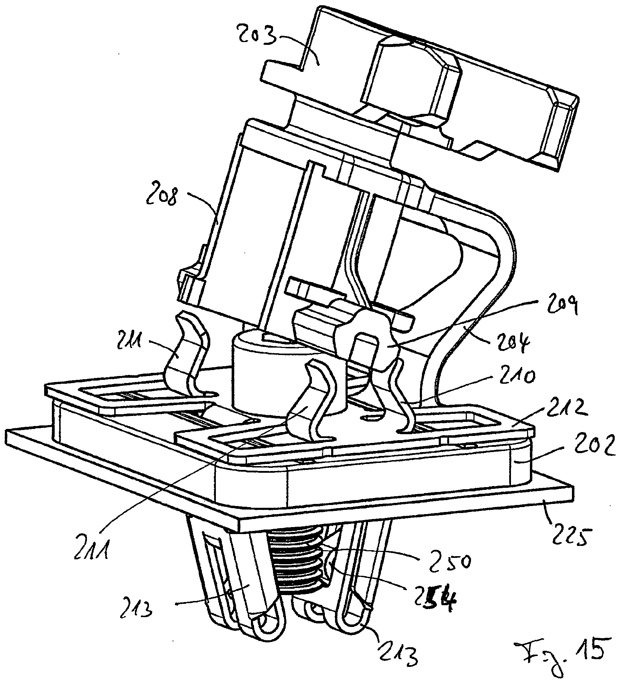

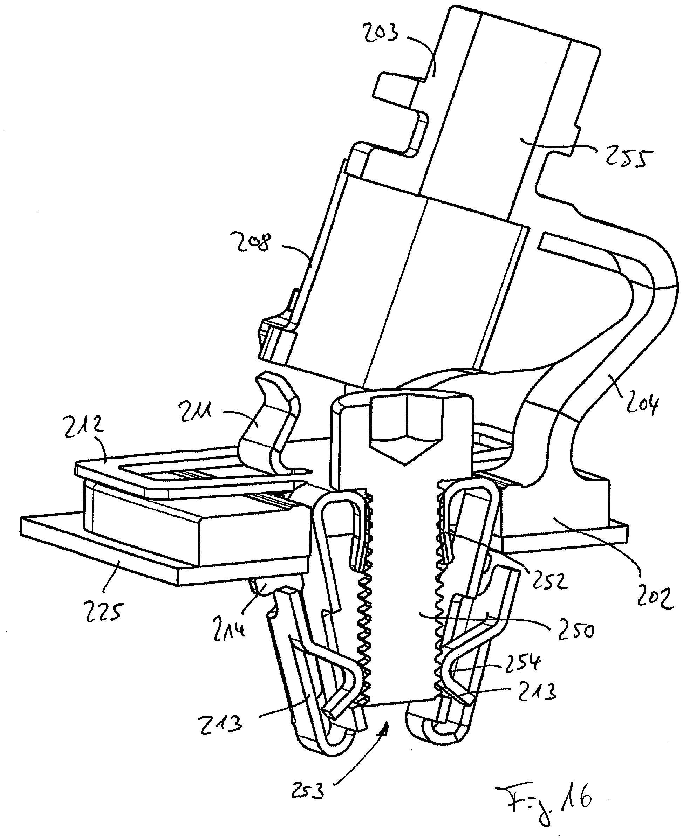

In den Fig. 11, 12, 13, 14, 15, 16 wird eine zu den in den Fig. 1 bis 10 dargestellten zwei Ausführungsformen unterschiedliche weitere Ausführungsform beschrieben. Neben geometrischen Änderungen in der Querschnittsfläche des Abstandshalters und in der Art der Ausführung der Verbindungselemente des zweiten Verbinders zum Verbinden mit einer Aufnahme des Abdeckpaneels unterscheidet sich die in den Fig. 11 bis 16 dargestellte Ausführungsform von den in den Fig. 1 bis 10 dargestellten Ausführungsformen insbesondere dadurch, dass ein Einführelement 250 vorhanden ist, das zusammen mit dem Befestiger 201 ein System bildet, mit welchem feststellbar ist, ob die Widerhaken 214 die Struktur 225 hintergreifen. Mittels des Einführelements 250 ist ein "Verbaunachweis" möglich. Wenn das Einführelement 250 in einen am Clip 212 ausgebildeten Kanal 253 einführbar ist, ist der Abstand der Widerhaken 214 derart, dass die Struktur 225 hintergriffen wird. Bei der Beschreibung der in den Fig. 11 bis 16 dargestellten weiteren Ausführungsformen wurden die zu den ersten Ausführungsformen vergleichbaren Bezugszeichen um den Wert 100 bzw. 200 erhöht. Zur Vereinfachung werden nur die Unterschiede zu den ersten beiden Ausführungsformen beschrieben.

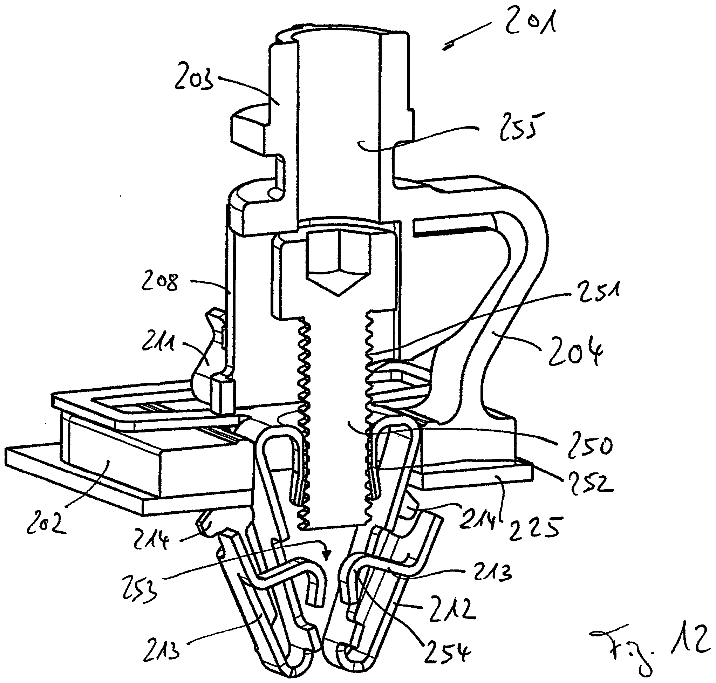

Das Einführelement 250 ist als schraubenförmiges Element ausgestaltet, das einen Schaftabschnitt und einen Kopfabschnitt aufweist. Der Schaftabschnitt weist ein Gewinde 251 auf. Das Einführelement 250 ist in einer Halterung 252, die zwei in Anlage zum Einführelement 250 ausgestaltete Arme umfasst, die am Clip 212 ausgestaltet sind, gehalten. Der Clip 212 weist einen Kanal 253 auf, dessen Innenkontur in Abhängigkeit von dem Abstand zwischen zwei Widerhaken 214 verändert werden kann. Die Innenkontur wird durch die mit den Widerhaken 214 verbundenen Verbindungselemente 213 bestimmt. Der Kanal 253 weist im Randbereich an den Verbindungselementen 213 vorgesehene Vorsprünge auf. In der in Fig. 12 dargestellten Position des Befestigers 201 hintergreifen die Widerhaken 214 die Struktur 225 noch nicht ganz, sodass das Einführelement 250 nicht in den Kanal 253 eingeführt werden kann. Die Außenkontur des Einführelement 250 ist im Wesentlichen an die Innenkontur des Kanals 253 angepasst, sofern nämlich die Innenkontur des Kanals 253 derart ist, dass ein Abstand der Widerhaken 214 vorliegt, bei dem die Widerhaken 214 die Struktur 225 hintergreifen.

An den Verbindungselementen 213 bzw. den Vorsprüngen der Verbindungselemente 213, die Randbereiche des Kanals sind, sind Gewindeabschnitte 254 ausgebildet, die in Eingriff mit dem Einführelement 250 gelangen können.

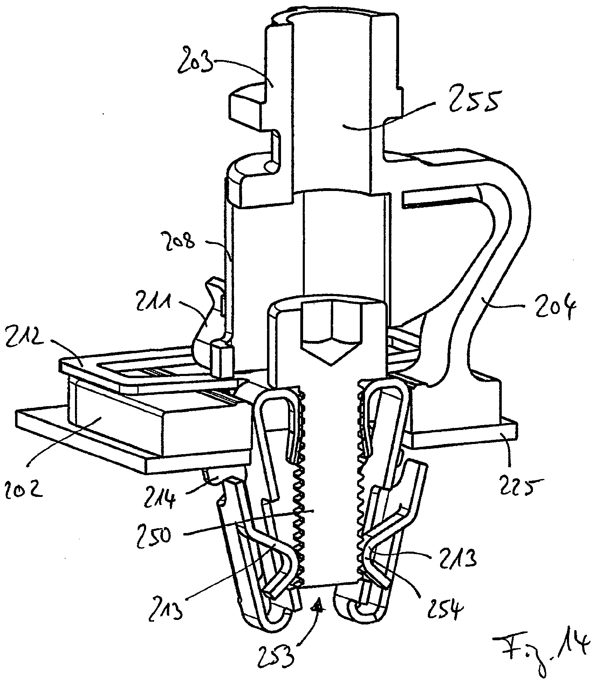

In der Fig. 14 ist gezeigt, dass das Einführelement 250 in den Kanal 253 eingeführt werden kann, wenn die Verbindungselemente 213 der beiden gegenüberliegenden Widerhaken 214 einen vorbestimmten Abstand aufweisen, bei dem die zugeordneten Widerhaken 214 die Struktur 225 hintergreifen.

Die Länge des Einführelements 250 ist derart bemessen, dass das Einführelement 250 in der Halterung gehalten werden kann und dabei der Knopf 209 durch die beiden Klammern 210, 211 gehalten werden. Bei der in den Fig. 11 bis 16 dargestellten weiteren Ausführungsformen ist eine Zugriffsöffnung 255 im zweiten Verbinder 203 ausgebildet, mittels derer auf das Einführelement 250 auch dann zugegriffen werden kann, wenn der Knopf 209 durch die beiden Klammern 210, 211 gehalten wird. Die Zutrittsöffnung 255 ist mittig über dem Kanal 253 angeordnet, wenn der Knopf 209 von den Klammern 210, 211 gehalten wird.

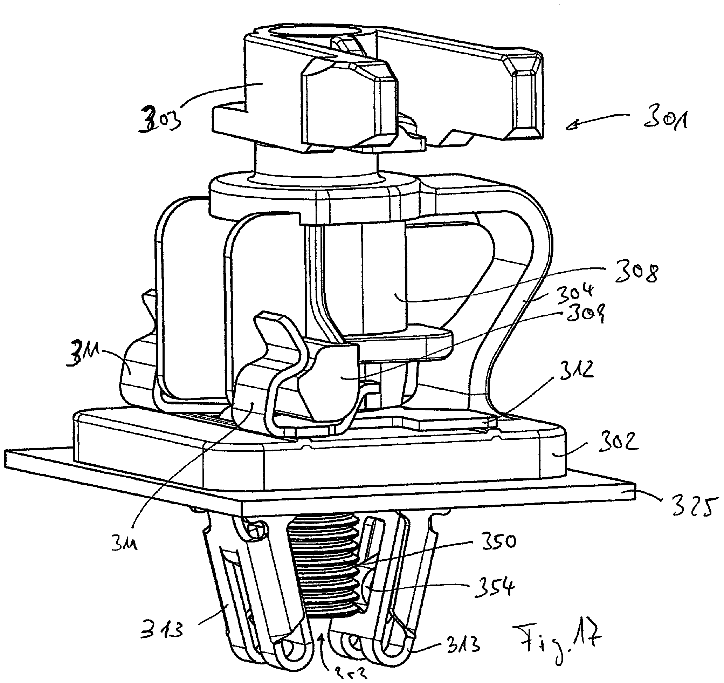

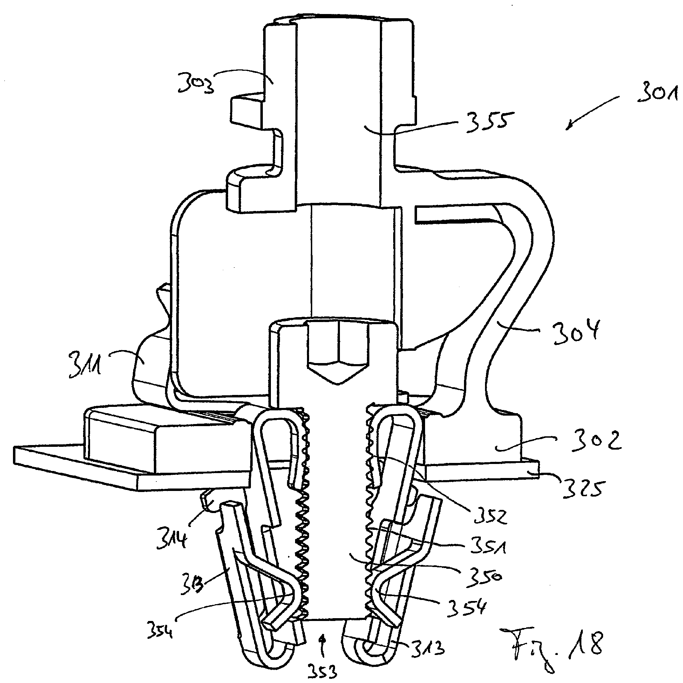

In den Fig. 17 und 18 wird eine zu der in den Fig. 11 bis 16 dargestellten weiteren Ausführungsform leicht unterschiedliche weitere Ausführungsform beschrieben. Neben einer unterschiedlichen Ausgestaltung des Abstandshalters 308 unterscheidet sich die in den Fig. 17 und 18 dargestellte Ausführungsform von der in den Fig. 11 bis 16 dargestellten Ausführungsform insbesondere dadurch, dass der Knopf 309 von nur einer Klammer 311 gehalten wird. Bei der Beschreibung der in den Fig. 17 und 18 dargestellten Ausführungsform wurden die zu der Ausführungsform in den Fig. 11 bis 16 vergleichbaren Bezugszeichen um den Wert 100 erhöht. Zur Vereinfachung werden nur die Unterschiede zu der ersten Ausführungsform beschrieben.

Der erste Verbinder 302 weist einen Clip 312 auf, der den Knopf 309 des Abstandshalters 8 mittels einer Klammer 211 hält.

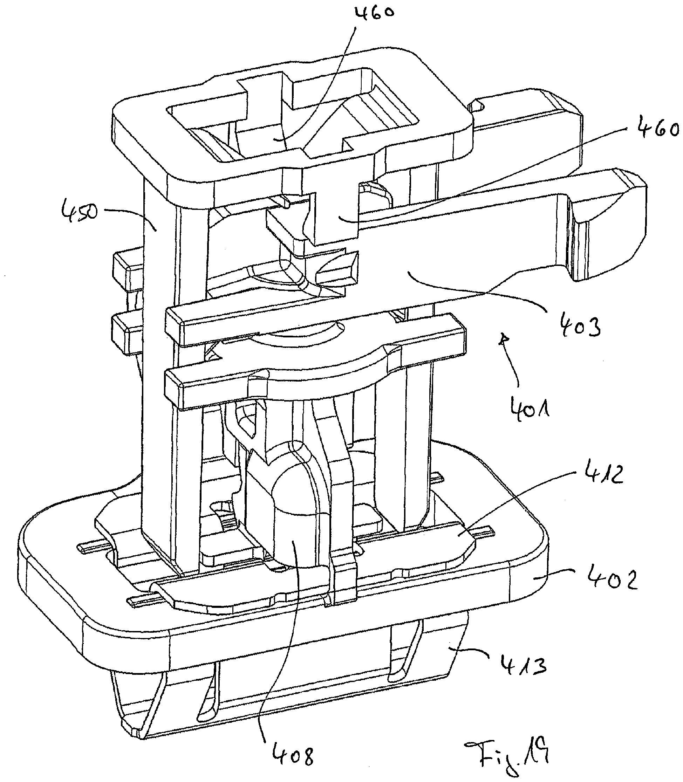

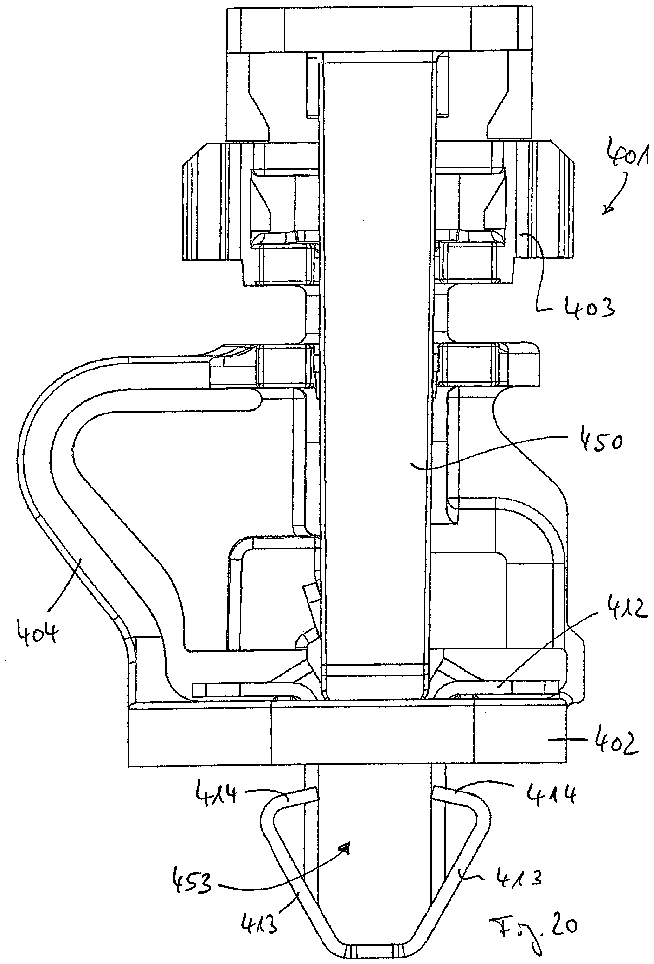

In den Fig. 19, 20, 21 und 22 wird eine zu der in den Fig. 11 bis 16 dargestellten Ausführungsform unterschiedliche weitere Ausführungsform beschrieben, die im Wesentlichen ein zur in den Fig. 11 bis 16 dargestellten Ausführungsform anders ausgestaltetes Einführelement 450 aufweist. Bei der Beschreibung der in den Fig. 19 bis 22 dargestellten weiteren Ausführungsform wurden die zu der in den Fig. 11 bis 16 dargestellten Ausführungsform vergleichbaren Bezugszeichen um den Wert 200 erhöht. Zur Vereinfachung werden nur die wesentlichen Unterschiede beschrieben.

Es sind zwei Kanäle 453 vorhanden, in die jeweils ein Stift eines Einführelements 450 eingeführt werden kann. Das Einführelement 450 ist als Steckelement ausgestaltet und kann nur in die Kanäle 453 eingeführt werden, wenn die Widerhaken 414 die nicht in den Figuren 19 bis 22 dargestellte Struktur hintergreifen. An dem Einführelement 450 ist eine Verrastung ausgebildet, die mit einer an dem zweiten Verbinder 403 ausgebildeten Rastung zusammen wirken kann. Die Verrastung am Einführelement 450 weist zwei Rastnasen 460 auf. Die Rastung am zweiten Verbinder 403 weist für jede Rastnase 460 eine Rastnut 461 auf.

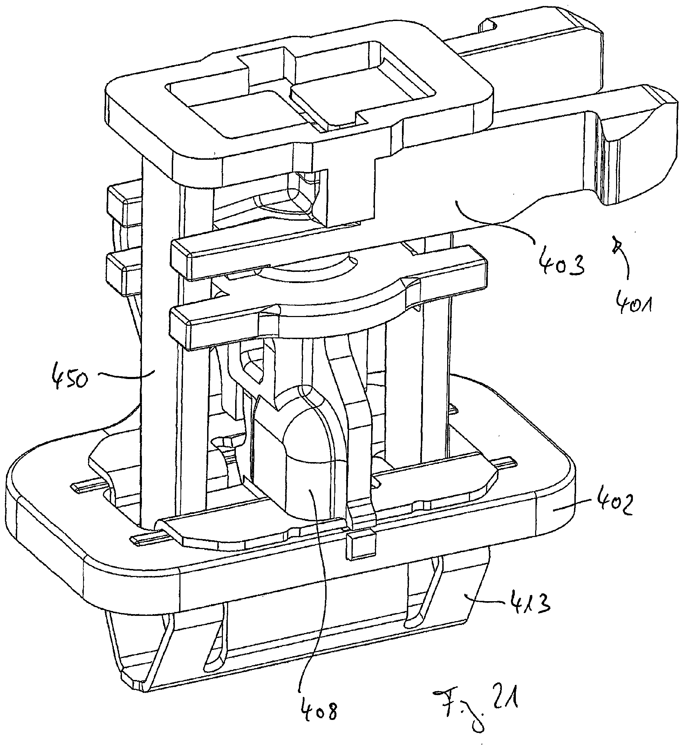

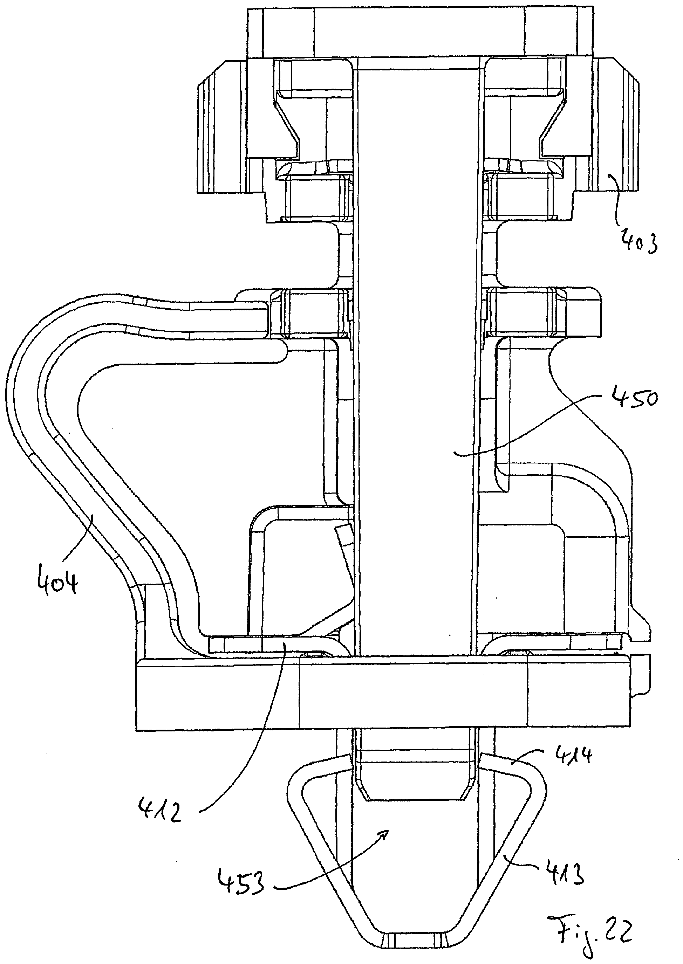

In den Fig. 21 und 22 ist der Verbaunachweis geführt. Das Einführelement 450 kann in den Kanal 453 eintauchen und das Einführelement 450 verrastet in dieser Position.

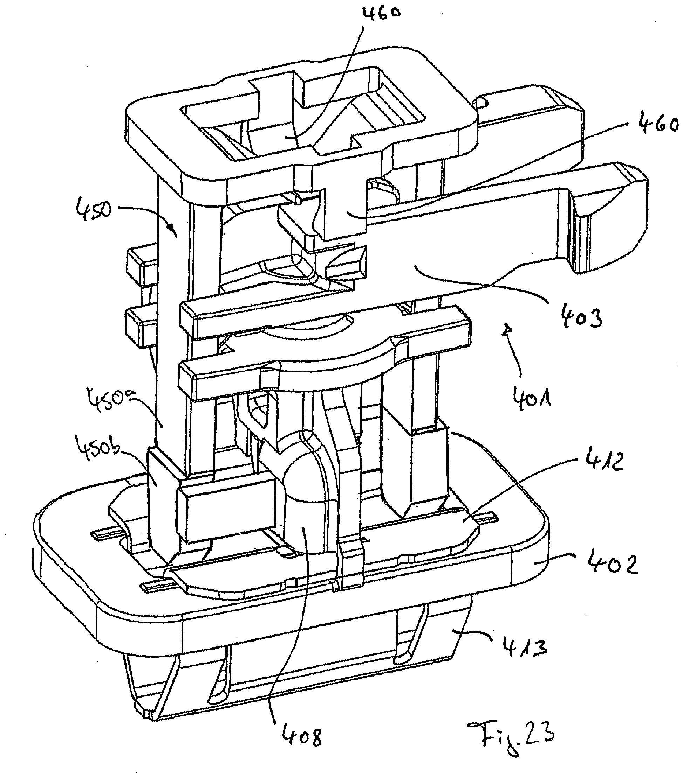

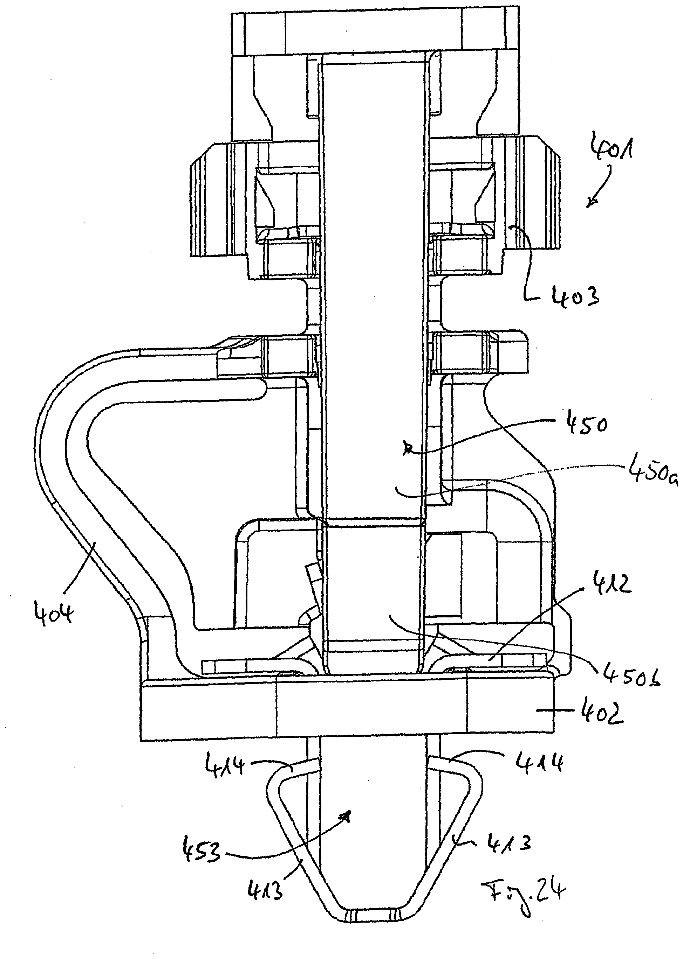

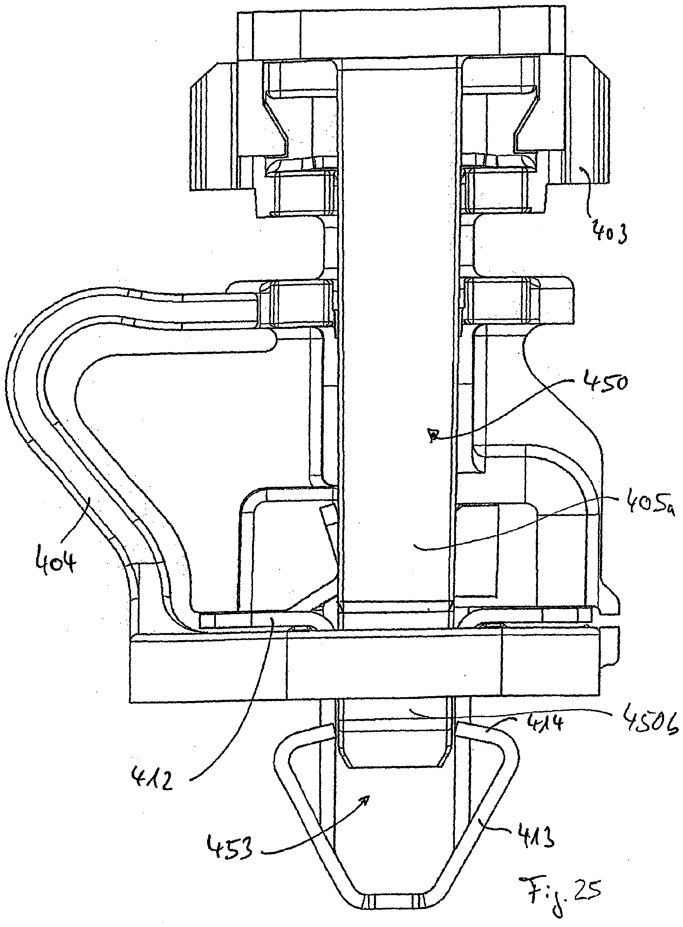

In den Fig. 23, 24 und 25 wird eine zu der in den Fig. 19 bis 22 dargestellten Ausführungsform unterschiedliche weitere Ausführungsform beschrieben. Der wesentliche Unterschied der in den Fig. 23 bis 25 dargestellten Ausführungsform besteht in der mehrteiligen Ausgestaltung des Einführelements 450. Das als Steckelement ausgestaltete Einführelement 450 weist zwei Teile auf, die als translatorisch bewegbare Teile 450a, 450b bzw. Stößel ausgestaltet sind. Die einzelnen Teile des Einführelements 450 werden mittels Führungselementen geführt. Die beiden Teile 450a, 450b sind in Wirkrichtung zueinander gehalten, sodass das Teil 450a in Längsbewegung in Richtung der Bewegung des Einführelements 450 das Element 450b in den Kanal einführt. Nur wenn der Kanal frei ist, d.h. die Widerhaken die Struktur hintergreifen, kann das Element 450b in den Kanal eingeführt werden. Durch ein Verrasten des Einführelements 450 durch die Elemente 460 wird das Einführelement 450 in Position gehalten, so dass auch ein Lösen der Widerhaken aus der Struktur verhindert wird.

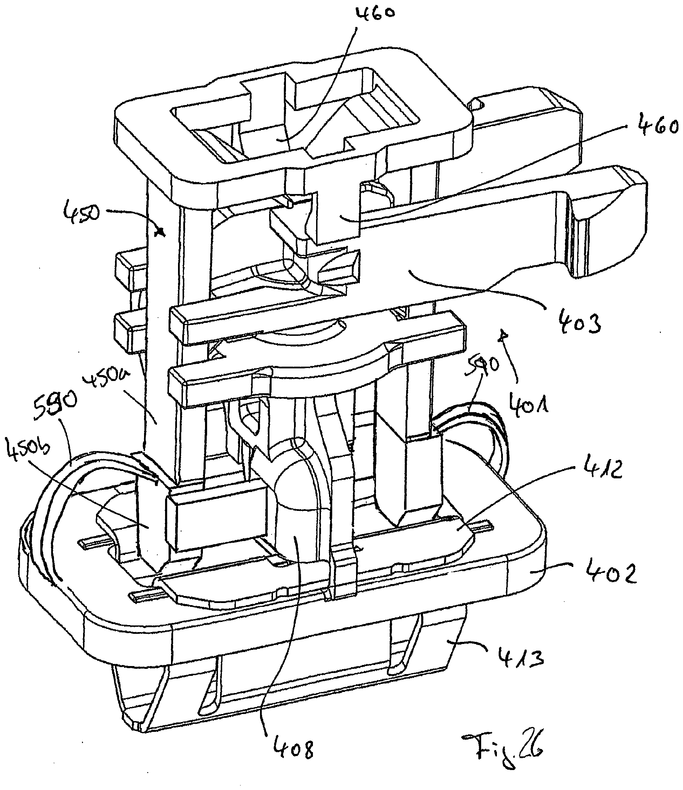

In Fig. 26 wird eine zu der in den Fig. 23 bis 25 dargestellten Ausführungsform unterschiedliche weitere Ausführungsform beschrieben, wobei der Unterschied zu der in den Fig. 23 bis 25 dargestellten Ausführungsform darin besteht, dass der Teil 450b des Einführelements 450 mittels einer Anbindung 590 mit dem ersten Verbinder 402 verbunden ist. Der Teil 450b des Einführelements 450 ist mittels der Anbindung 590 an dem Verbinder 402 angespritzt. Die Anbindung 590 ist derart von außen nach innen gebogen, dass die Anbindung 590 eine Spannung in Art einer Feder ausübt, so dass die Anbindung 590 ein Bestreben aufweist, in die Ausgangslage (beispielsweise den Spritzzustand) zurückzukehren.

## Patentansprüche

1. Befestiger (101) zum lösbaren Befestigen eines Paneels an einer Struktur, wobei der Befestiger (101)
- einen ersten Verbinder (102) zum Verbinden des Befestigers (101) mit der Struktur,
- einen zweiten Verbinder (103) zum Verbinden des Befestigers (101) mit dem Paneel aufweist, wobei der zweite Verbinder (103) in dem normalen Betriebszustand des Befestigers (101) lösbar an dem ersten Verbinder (102) befestigt ist und
- ein Rückhalteband (104), das mit seinem ersten Ende (105) mit dem ersten Verbinder (102) und mit seinem zweiten Ende (106) mit dem zweiten Verbinder (103) verbunden ist, wobei zumindest ein Teil (107) des Rückhaltebandes (104) in dem normalen Betriebszustand des Befestigers (101) eine gebogene Form aufweist,
**dadurch gekennzeichnet, dass** ein Abstandhalter (108) zwischen dem ersten Verbinder (102) und dem zweiten Verbinder (103) angeordnet ist und in dem normalen Betriebszustand des Befestigers (101) ein Vorsprung (130) des Abstandhalters (108) in den Raum innerhalb des gebogen ausgebildeten Teils (107) des Rückhaltebandes (104) hineinragt.

2. Befestiger nach Anspruch 1 **dadurch gekennzeichnet, dass** der Abstandhalter ein Würfel oder ein Zylinder oder eine anders als ein Würfel oder ein Zylinder geformte Stütze ist.

3. Befestiger nach Anspruch 1 oder 2, **dadurch gekennzeichnet, dass** der Vorsprung (130) in dem normalen Betriebszustand des Befestigers (101) eine von dem ersten Verbinder (102) fortweisende Oberfläche aufweist und zwischen der von dem ersten Verbinder (102) fortweisenden Oberfläche und einer der von dem ersten Verbinder (102) fortweisenden Oberfläche zuweisenden Oberfläche des Rückhalteband (104) ein Spalt vorgesehen ist.

4. Befestiger (1, 101) nach einem der Ansprüche 1 bis 3, **dadurch gekennzeichnet, dass** das erste Ende (5, 105) des Befestigungsbandes (4, 104) in dem normalen Betriebszustand des Befestigers (1, 101) sich im Wesentlichen in eine erste Richtung (A) erstreckt und sich das zweite Ende (3, 103) des Rückhaltebandes (4, 104) in dem normalen Betriebszustand des Befestigers (1, 101) im Wesentlichen in eine zweite Richtung (B) erstreckt,
und
die erste Richtung nicht parallel zu der zweiten Richtung verläuft und der eingeschlossene Winkel zwischen der ersten Richtung und der zweiten Richtung größer als 5° ist.

5. Befestiger (1, 101) nach einem der Ansprüche 1 bis 4,
**dadurch gekennzeichnet, dass** ein Abstandhalter (8, 108) zwischen dem ersten Verbinder (2, 102) und dem zweiten Verbinder (3, 103) angeordnet ist, wobei sich der Abstandhalter (8, 108) entlang einer Längsrichtung erstreckt und das Verhältnis (LP/LR) zwischen der Längserstreckung (LP) des Abstandhalters (8, 108) in Richtung der Längsrichtung zu der Länge des Rückhaltebands (4, 104) (LR) durch die folgende Formel definiert wird: 1 < LP/LR < 2.

6. Befestiger nach einem der Ansprüche 1 bis 5, **dadurch gekennzeichnet, dass** der erste Verbinder (2, 102) einen Clip (12, 112) hat, der für ein Verbinden mit der Struktur (25) geeignet ist.

7. Befestiger nach einem der Ansprüche 1 bis 6, **dadurch gekennzeichnet, dass** der zweite Verbinder einen Clip hat, der für eine Verbindung mit dem Paneel geeignet ist.

8. Befestiger nach einem der Ansprüche 1 bis 7, **dadurch gekennzeichnet, dass**
- der Abstandhalter an seinem ersten Ende fest mit dem ersten Verbinder verbunden ist und an seinem zweiten Ende lösbar an dem zweiten Verbinder befestigt ist
oder
- der Abstandhalter (8, 108) an seinem ersten Ende fest mit dem zweiten Verbinder (3, 103) verbunden ist und an seinem zweiten Ende lösbar an dem ersten Verbinder (2, 102) befestigt ist.

9. Befestiger nach Anspruch 8, **dadurch gekennzeichnet, dass**
- der Abstandhalter an seinem ersten Ende fest mit dem ersten Verbinder verbunden ist und dass ein Kopf von dem zweiten Ende des Abstandhalters vorragt und lösbar zwischen zwei Klammern, die an dem zweiten Verbinder vorgesehen sind, aufgenommen wird,
oder
- der Abstandhalter (8, 108) an seinem ersten Ende fest mit dem zweiten Verbinder (3, 103) verbunden ist und dass ein Kopf (9, 109) von dem zweiten Ende des Abstandhalters (8, 108) vorragt und lösbar zwischen zwei Klammern (10,11; 110, 111), die an dem ersten Verbinder (2, 102) vorgesehen sind, aufgenommen wird.

10. Befestiger nach Anspruch 9, **dadurch gekennzeichnet, dass**
- der Abstandhalter an seinem ersten Ende fest mit dem ersten Verbinder verbunden ist und dass ein Kopf von dem zweiten Ende des Abstandhalters vorragt und lösbar zwischen zwei Klammern, die an dem zweiten Verbinder vorgesehen sind, aufgenommen wird, wobei der zweite Verbinder eine flache, dem ersten Verbinder zugewandte Oberfläche mit einem Loch aufweist und die zwei Klammern das Loch in Richtung auf den ersten Verbinder durchgreifen, wobei der Kopf durch die beiden Klammern oberhalb des Lochs und auf der Seite der Oberfläche gehalten wird, auf der auch der erste Verbinder angeordnet ist,
oder
- der Abstandhalter (8, 108) an seinem ersten Ende fest mit dem zweiten Verbinder (3, 103) verbunden ist und dass ein Kopf (9, 109) von dem zweiten Ende des Abstandhalters (8, 108) vorragt und lösbar zwischen zwei Klammern (10,11; 110, 111), die an dem ersten Verbinder (2, 102) vorgesehen sind, aufgenommen wird, wobei der erste Verbinder (2, 102) eine flache, dem zweiten Verbinder (3, 103) zugewandte Oberfläche mit einem Loch aufweist und die zwei Klammern (10,11; 110, 111) das Loch in Richtung auf den zweiten Verbinder (3, 103) durchgreifen, wobei der Knopf (9, 109) durch die beiden Klammern (10,11; 110,111) oberhalb des Lochs und auf der Seite der Oberfläche gehalten wird, auf der auch der zweite Verbinder (3, 103) angeordnet ist.

11. Abdeckpaneel (20) für ein Airbag (21), **gekennzeichnet durch** einen Befestiger (1, 101) nach einem der Ansprüche 1 bis 10, wobei der zweite Verbinder (3, 103) mit dem Abdeckpaneel (20) verbunden ist.

12. Fahrzeug mit einer Struktur (25) und einem Airbag (21) und einem Abdeckpaneel (20) für das Airbag (21) nach Anspruch 11, **dadurch gekennzeichnet, dass** das Airbag (21) zwischen dem Abdeckpaneel (20) und der Struktur (25) angeordnet ist, und dass der erste Verbinder (2, 102) mit der Struktur (25) verbunden ist.

13. Befestiger nach Anspruch 6, **dadurch gekennzeichnet, dass** der Clip (12, 112, 212, 312, 412) eine Zugriffsöffnung aufweist, die einen Zugriff auf Verbindungselemente erlaubt, die mit Widerhaken (14, 114, 214, 314, 414) des Clips (12, 112, 212, 312, 412) verbunden sind,.

14. System umfassend einen Befestiger nach Anspruch 6 und ein Einführelement (250, 350, 450), **dadurch gekennzeichnet, dass** der Clip (12, 112, 212, 312, 412) einen Kanal (253, 353, 453) aufweist, dessen Innenkontur in Abhängigkeit von dem Abstand zwischen zwei Widerhaken (14, 114, 214, 314, 414) verändert werden kann, wobei die Widerhaken einen ausgefederten Zustand und einen zusammengedrückten Zustand aufweisen und das Einführelement (250, 350, 450) in den Kanal (253, 353, 453) einführbar ist, wenn die Widerhaken (14, 114, 214, 314, 414) in dem ausgefederten Zustand sind.

15. System nach Anspruch 14, **dadurch gekennzeichnet, dass** die Widerhaken (14, 114) mit Verbindungselementen (13, 113, 213, 313, 413) des Clips (12, 112, 212, 312, 412) verbunden oder die Widerhaken (14, 114, 214, 314, 414) an den Verbindungselementen (13, 113, 213, 313, 413) des Clips (12, 112, 212, 312, 412) angeformt sind, und ein oder mehrere Abschnitte an einem Verbindungselement (13, 113, 213, 313, 413) einen Innenkonturabschnitt des Kanals (253, 353, 453) bilden.

## Claims

1. Fastener (101) for the disconnectable fitting of a panel to a structure, wherein the fastener (101),
- has a first connector (102) for connecting the fastener (101) with the structure,
- has a second connector (103) for connecting the fastener (101) with the panel, wherein the second connector (103) can be disconnectably fitted to the first connector (102) in the normal operating condition of the fastener (101), and
- a retention band (104) is connected with the first connector (102) with its first end (105) and with the second connector (103) with its second end (106), wherein at least a part (107) of the retention band (104) has a curved shape in the normal operating condition of the fastener (101),
**characterised in that** a distancer (108) is arranged between the first connector (102) and the second connector (103) and a protrusion (130) of the distancer (108) protrudes into the space inside the curve-shaped part (107) of the retention band (104) in the normal operating condition of the fastener (101).

2. Fastener according to claim 1, **characterised in that** the distancer is a cube or a cylinder or a support shaped differently from a cube or a cylinder.

3. Fastener according to claim 1 or 2, **characterised in that** the protrusion (130) has an outward surface facing away from the first connector (102) in the normal operating condition of the fastener (101) and **in that** a gap is provided between the surface facing away from the first connector (102) and a surface of the retention band (104) facing towards the surface of the first connector (102).

4. Fastener (1, 101) according to one of the claims 1 to 3, **characterised in that** the first end (5, 105) of the fastener band (4, 104) extends substantially in a first direction (A) in the normal operating condition of the fastener (1, 101), and the second end (3, 103) of the retention band (4, 104) extends substantially in a second direction (B) in the normal operating condition of the fastener (1, 101),
and the first direction does not run parallel to the second direction and the enclosed angle between the first direction and the second direction is greater than 5°.

5. Fastener (1, 101) according to one of the claims 1 to 4,
**characterised in that** a distancer (8, 108) is arranged between the first connector (2, 102) and the second connector (3, 103), wherein the distancer (8, 108) extends along a longitudinal direction and the ratio (LP/LR) between the longitudinal expansion (LP) of the distancer (8, 108) in the direction of the longitudinal direction to the length of the retention band (4, 104) (LR) is defined by the following formula: 1 < LP/LR < 2.

6. Fastener according to one of the claims 1 to 5, **characterised in that** the first connector (2, 102) has a clip (12, 112) that is suitable for connecting with the structure (25).

7. Fastener according to one of the claims 1 to 6, **characterised in that** the second connector has a clip that is suitable for connecting with the panel.

8. Fastener according to one of the claims 1 to 7, **characterised in that**
- the distancer is firmly connected with the first connector at its first end and is disconnectably connected with the second connector at its second end
or
- the distancer (8, 108) is firmly connected with the second connector (3, 103) at its first end and is disconnectably connected with the first connector (2, 102) at its second end.

9. Fastener according to claim 8, **characterised in that**
- the distancer is firmly connected with the first connector at its first end and that a head protrudes from the second end of the distancer and is disconnectably received between two brackets provided on the second connector,
or
- the distancer (8, 108) is firmly connected with the second connector (3, 103) at its first end and that a head (9, 109) protrudes from the second end of the distancer (8, 108) and is disconnectably received between two brackets (10,11; 110, 111) provided on the first connector (2, 102).

10. Fastener according to claim 9, **characterised in that**
- the distancer is firmly connected with the first connector at its first end and that a head protrudes from the second end of the distancer and is disconnectably received between two brackets provided at the second connector, wherein the second connector has a flat surface facing the first connector with a hole, and the two brackets pass through the hole in the direction of the first connector, wherein the head is held by the two brackets above the hole and on the side of the surface on which the first connector is also arranged,
or
- the distancer (8, 108) is firmly connected with the second connector (3, 103) at its first end and that a head (9, 109) protrudes from the second end of the distancer (8, 108) and is disconnectably received between two brackets (10, 11; 110, 111) provided on the first connector (2, 102), wherein the first connector (2, 102) has a flat surface facing the second connector (3, 103) with a hole, and the two brackets (10, 11; 110, 111) pass through the hole in the direction of the second connector (3, 103), wherein the head (9, 109) is held by the two brackets (10, 11; 110 111) above the hole and on the side of the surface on which the second connector (3, 103) is also arranged.

11. Cover panel (20) for an airbag (21), **characterised by** a fastener (1, 101) according to any one of the claims 1 to 10, wherein the second connector (3, 103) is connected with the cover panel (20).

12. Vehicle with a structure (25) and an airbag (21) and a cover panel (20) for an airbag (21) according to claim 11, **characterised in that** the airbag (21) is arranged between the cover panel (20) and the structure (25), and **in that** the first connector (2, 102) is connected with the structure (25).

13. Fastener according to claim 6, **characterised in that** the clip (12, 112, 212, 312, 412) has an access opening that allows access to the connection elements that are connected with barbed hooks (14, 114, 214, 314, 414) of the clip (12, 112, 212, 312, 412).

14. System comprising a fastener according to claim 6 and an insertion element (250, 350, 450), **characterised in that** the clip (12, 112, 212, 312, 412) has a channel (253, 353, 453), the inner contour of which can be changed depending on the distance between two barbed hooks (14, 114, 214, 314, 414), wherein the barbed hooks have a relaxed condition and a compressed condition and the insertion element (250, 350, 450) can be inserted into the channel (253, 353, 453) when the barbed hooks (14, 114, 214, 314, 414) are in the relaxed condition.

15. System according to claim 14, **characterised in that** the barbed hooks (14, 114) are connected with connection elements (13, 113, 213, 313, 413) of the clip (12, 112, 212, 312, 412) or the barbed hooks (14, 114, 214, 314, 414) are formed on the connection elements (13, 113, 213, 313, 413) of the clip (12, 112, 212, 312, 412) and one or more sections on one connection element (13, 113, 213, 313, 413) form an inner contour section of the channel (253, 353, 453).

## Revendications

1. Attache de raccordement (101) pour la fixation amovible d'un panneau sur une structure, l'attache de raccordement (101) présentant
- un premier connecteur (102) pour relier l'attache de raccordement (101) à la structure,
- un deuxième connecteur (103) pour relier l'attache de raccordement (101) au panneau, où le deuxième connecteur (103) est fixé de façon amovible au premier connecteur (102) en mode de fonctionnement normal de l'attache de raccordement (101) et
- une bande de retenue (104), reliée par sa première extrémité (105) au premier connecteur (102) et par sa deuxième extrémité (106) au deuxième connecteur (103), où au moins une partie (107) de la bande de retenue (104) présente une forme recourbée en mode de fonctionnement normal de l'attache de raccordement (101),
**caractérisé en ce qu'**un écarteur (108) est placé entre le premier connecteur (102) et le deuxième connecteur (103) et, en mode de fonctionnement normal de l'attache de raccordement (101), une saillie (130) de l'écarteur (108) avance à l'intérieur de la partie recourbée (107) de la bande de retenue (104).

2. Attache de raccordement selon la revendication 1, **caractérisée en ce que** l'écarteur est un cube ou un cylindre ou un support ayant une forme autre que celle de cube ou de cylindre.

3. Attache de raccordement selon la revendication 1 ou 2, **caractérisée en ce que** la saillie (130) présente, en mode de fonctionnement normal de l'attache de raccordement (101), une surface opposée au premier connecteur (102) et qu'une fente est prévue entre la surface opposée au premier connecteur (102) et une surface de la bande de retenue (104) tournée vers la surface opposée au premier connecteur (102).

4. Attache de raccordement (1, 101) selon l'une quelconque des revendications 1 à 3, **caractérisée en ce que** la première extrémité (5, 105) de la bande de fixation (4, 104) s'étend pour l'essentiel dans une première direction (A) en mode de fonctionnement normal de l'attache de raccordement (1, 101) et que la deuxième extrémité (3, 103) de la bande de fixation (4, 104) s'étend pour l'essentiel dans une deuxième direction (B) en mode de fonctionnement normal de l'attache de raccordement (1, 101),
et que la première direction n'est pas parallèle à la deuxième direction et l'angle inclus entre la première direction et la deuxième direction est supérieur à 5°.

5. Attache de raccordement (1, 101) selon l'une quelconque des revendications 1 à 4,
**caractérisée en ce qu'**un écarteur (8, 108) est placé entre le premier connecteur (2, 102) et le deuxième connecteur (3, 103), où l'écarteur (8, 108) s'étend suivant la direction longitudinale et le rapport (LP/LR) entre l'extension longitudinale (LP) de l'écarteur (8, 108) dans le sens de la direction longitudinale et la longueur de la bande de retenue (4, 104) (LR) est défini par la formule suivante : 1 < LP/LR < 2.

6. Attache de raccordement selon l'une quelconque des revendications 1 à 5, **caractérisée en ce que** le premier connecteur (2, 102) possède un clip (12, 112) adapté à la connexion avec la structure (25).

7. Attache de raccordement selon l'une quelconque des revendications 1 à 6, **caractérisée en ce que** le deuxième connecteur possède un clip adapté à la connexion avec le panneau.

8. Attache de raccordement selon l'une quelconque des revendications 1 à 7, **caractérisée en ce que**
- l'écarteur est fixé solidement avec le premier connecteur par sa première extrémité et est fixé de façon amovible au deuxième connecteur par sa deuxième extrémité ou
- que l'écarteur (8, 108) est fixé solidement avec le deuxième connecteur (3, 103) par sa première extrémité et est fixé de façon amovible au premier connecteur (2, 102) par sa deuxième extrémité.

9. Attache de raccordement selon la revendication 8, **caractérisée en ce que**
- l'écarteur est relié avec le premier connecteur par sa première extrémité et qu'une tête fait saillie de la deuxième extrémité de l'écarteur, étant reçue de façon amovible entre deux pinces prévues sur le deuxième connecteur, ou
- l'écarteur (8, 108) est relié avec le deuxième connecteur (3, 103) par sa première extrémité et qu'une tête (9, 109) fait saillie de la deuxième extrémité de l'écarteur (8, 108), étant reçue de façon amovible entre deux pinces (10,11 ; 110, 111), prévues sur le premier connecteur (2, 102).

10. Attache de raccordement selon la revendication 9, **caractérisée en ce que**
- l'écarteur est relié avec le premier connecteur par sa première extrémité et qu'une tête fait saillie de la deuxième extrémité de l'écarteur, étant reçue de façon amovible entre deux pinces prévues sur le deuxième connecteur, où le deuxième connecteur présente une surface plate tournée vers le premier connecteur et munie d'un orifice et les deux pinces traversent l'orifice en direction du premier connecteur, la tête étant maintenue par les deux pinces au-dessus de l'orifice et sur le côté de la surface, sur laquelle est également placé le premier connecteur, ou
- l'écarteur (8, 108) est relié avec le deuxième connecteur (3, 103) par sa première extrémité et qu'une tête (9, 109) fait saillie de la deuxième extrémité de l'écarteur (8, 108), étant reçue de façon amovible entre deux pinces (10,11 ; 110, 111) prévues sur le premier connecteur (2, 102), où le premier connecteur (2, 102) présente une surface plate tournée vers le deuxième connecteur (3, 103) et munie d'un orifice et les deux pinces (10,11 ; 110, 111) traversent l'orifice en direction du deuxième connecteur (3, 103), le bouton (9, 109) étant maintenu par les deux pinces (10,11 ; 110, 111) au-dessus de l'orifice et sur le côté de la surface, sur laquelle est également placé le deuxième connecteur (3, 103).

11. Panneau de recouvrement (20) pour un airbag (21), **caractérisé par** une attache de raccordement (1, 101) selon l'une quelconque des revendications 1 à 10, où le deuxième connecteur (3, 103) est relié avec le panneau de recouvrement (20).

12. Véhicule avec une structure (25), un airbag (21) et un panneau de recouvrement (20) pour l'airbag (21) selon la revendication 11, **caractérisé en ce que** l'airbag (21) est placé entre le panneau de recouvrement (20) et la structure (25) et que le premier connecteur (2, 102) est relié à la structure (25).

13. Attache de raccordement selon la revendication 6, **caractérisée en ce que** le clip (12, 112, 212, 312, 412) présente une ouverture d'accès permettant d'accéder aux éléments de raccordement reliés à des crochets de retenue (14, 114, 214, 314, 414) du clip (12, 112, 212, 312, 412).

14. Système comprenant une attache de raccordement selon la revendication 6 et un élément d'insertion (250, 350, 450), **caractérisé en ce que** le clip (12, 112, 212, 312, 412) présente un canal (253, 353, 453), dont le contour intérieur peut être modifié en fonction de l'intervalle entre deux crochets de retenue (14, 114, 214, 314, 414), où les crochets de retenue présentent un état décomprimé et un état comprimé et l'élément d'insertion (250, 350, 450) peut être inséré dans le canal (253, 353, 453) lorsque les crochets de retenue (14, 114, 214, 314, 414) sont en état décomprimé.

15. Système selon la revendication 14, **caractérisé en ce que** les crochets de retenue (14, 114) sont reliés aux éléments de raccordement (13, 113, 213, 313, 413) du clip (12, 112, 212, 312, 412) ou les crochets de retenue (14, 114, 214, 314, 414) sont moulés sur les éléments de raccordement (13, 113, 213, 313, 413) du clip (12, 112, 212, 312, 412), et une ou plusieurs sections d'un élément de raccordement (13, 113, 213, 313, 413) forment une section de contour intérieur du canal (253, 353, 453).
